# FASCICULE DE BREVET EUROPEEN

(11) **EP 3 563 075 B1**
(45) Date de publication et mention de la délivrance du brevet: **26.01.2022**
(21) Numéro de dépôt: 17829989.7
(22) Date de dépôt: 26.12.2017
(51) Int. Cl.: F16H 25/24, F02K 1/76, F16H 25/20

(54) **ACTIONNEUR A VERROUILLAGE PASSIF**
AKTUATOR MIT PASSIVER VERRIEGELUNG
ACTUATOR WITH PASSIVE LOCKING

(30) Priorité: 30.12.2016 FR 1663571; 30.12.2016 FR 1663572; 30.12.2016 FR 1663573; 30.12.2016 FR 1663574
(43) Date de publication de la demande: 06.11.2019
(73) Titulaire: Safran Electronics & Defense, 75015 Paris (FR)
(72) Inventeur: BASTIDE, Christophe, 77550 MOISSY-CRAMAYEL (FR); OMNES, Pascal, 77550 MOISSY-CRAMAYEL (FR)
(74) Mandataire: Lavialle, Bruno François Stéphane
(86) Numéro de dépôt international: PCT/EP2017/084592
(87) Numéro de publication internationale: WO 2018/122224

(56) Documents cités:
- FR-A1- 2 989 740
- FR-A1- 2 993 026
- FR-A1- 3 006 379

## Description

### DOMAINE DE L'INVENTION

La présente invention concerne le domaine des actionneurs aéronautiques, et plus particulièrement les actionneurs verrouillables d'inverseur de poussée des réacteurs et, plus particulièrement, des turboréacteurs.

### ARRIERE PLAN DE L'INVENTION

Dans un système classique d'inversion de poussée d'un turboréacteur, la nacelle du turboréacteur est pourvue de surfaces mobiles qui peuvent être déployées de façon à renvoyer vers l'avant une partie du flux de gaz produit par le turboréacteur. Le déploiement des surfaces mobiles permet notamment de réduire les distances d'atterrissage. Chaque surface mobile est déployée à l'aide d'un actionneur et comprend un dispositif principal de verrouillage comportant des verrous en redondance pour relier la surface mobile à la nacelle afin de prévenir tout déploiement accidentel de la surface mobile.

Traditionnellement, les surfaces mobiles sont déplacées au moyen de vérins hydrauliques qui ont l'avantage de rester en position dès lors que la pression dans les chambres du vérin reste la même.

Il a été envisagé une nouvelle génération d'actionneurs de surface mobile qui comprennent un bâti, une motorisation électrique avec éventuellement un réducteur, et une vis liée en rotation avec un arbre de sortie de la motorisation. Un tube d'extension solidaire d'un écrou engagé sur la vis a une extrémité pourvue des moyens de sa liaison à la surface mobile, le tube étant monté coulissant dans un fourreau lié au bâti. Le tube d'extension peut adopter une position rétractée dans laquelle la surface mobile est refermée et une position déployée dans laquelle la surface mobile dévie au moins une partie du flux du réacteur. Généralement, un tel actionneur hydraulique ou électrique possède une surcourse de rétractation, pour amener le tube d'extension au-delà de sa position rétractée et la surface mobile au-delà de sa position refermée, permettant, en comprimant légèrement les joints coopérant avec la surface mobile, de faciliter le désengagement des verrous du dispositif principal de verrouillage des surfaces mobiles (PLS primary lock system).

Cependant, lorsque la motorisation de l'actionneur n'est plus alimentée en énergie, un effort qui serait appliqué directement sur la surface mobile pourrait la déplacer (choc, vibration, commande erronée).

Les conséquences d'un déploiement non souhaité d'une surface mobile d'un inverseur de poussée étant classées catastrophique, il est souhaitable de rajouter un dispositif de verrouillage supplémentaire. Il a été envisagé d'ajouter un verrou supplémentaire sur la surface mobile ainsi qu'un actionneur de verrouillage/déverrouillage dédié. La nacelle comprenant un nombre important de mécanismes, l'intégration d'un ensemble verrou + actionneur supplémentaire est délicate et est source de poids supplémentaire. Ces éléments doivent en plus être protégés thermiquement, être dimensionnés de manière à ne pas engendrer de vibrations et disposer d'un système de commande dédié. Toutes ces sujétions augmentent le poids et l'encombrement de l'équipement, ce qui est un frein à l'utilisation d'actionneurs électriques pour l'inversion de poussée.

Il est connu du document FR2989740 un actionneur électromécanique verrouillable comprenant un bâti, un moteur dont l'arbre de sortie est solidaire en rotation d'une vis solidaire s'étendant selon un axe longitudinal, un écrou engagé sur la vis et pourvu de moyens de liaison à un élément à déplacer. L'écrou se déplace sur la vis depuis une première position rétractée de l'écrou jusqu'à une deuxième position déployée de l'écrou correspondant respectivement à une première position rétractée de l'élément à déplacer et une deuxième position déployée de l'élément à déplacer. L'actionneur électromécanique de l'invention comprend également un dispositif de verrouillage en position rétractée de l'élément à déplacer. Le dispositif de verrouillage comprend des moyens d'actionnement d'un verrou pouvant sélectivement adopter une première position dans laquelle le verrou empêche une rotation relative de la vis et de l'écrou qui amènerait à un déploiement de l'élément à déplacer et une deuxième position dans laquelle la rotation relative de la vis et de l'écrou est libre.

### OBJET DE L'INVENTION

Un but de l'invention est de réduire le poids et l'encombrement d'un dispositif de verrouillage d'un élément déplacé par un actionneur électromécanique.

### RESUME DE L'INVENTION

A cet effet, on prévoit un actionneur électromécanique verrouillable comprenant un bâti, un moteur dont l'arbre de sortie est solidaire en rotation d'une vis solidaire s'étendant selon un axe longitudinal, un écrou engagé sur la vis et pourvu de moyens de liaison à un élément à déplacer. L'écrou se déplace sur la vis depuis une première position rétractée de l'écrou jusqu'à une deuxième position déployée de l'écrou correspondant respectivement à une première position rétractée de l'élément à déplacer et une deuxième position déployée de l'élément à déplacer. L'actionneur électromécanique de l'invention comprend également un dispositif de verrouillage en position rétractée de l'élément à déplacer. Le dispositif de verrouillage comprend des moyens d'actionnement d'un verrou pouvant sélectivement adopter une première position dans laquelle le verrou empêche une rotation relative de la vis et de l'écrou qui amènerait à un déploiement de l'élément à déplacer et une deuxième position dans laquelle la rotation relative de la vis et de l'écrou est libre.

Selon l'invention, le dispositif de verrouillage est un dispositif passif et est agencé pour que lorsque le verrou est dans sa première position, le verrou passe de la première position à la deuxième position lorsque l'élément à déplacer est amené au-delà de sa position rétractée. Le dispositif de verrouillage est également agencé pour que, lorsque le verrou est dans sa deuxième position, le verrou passe de la deuxième position à la première position lorsque l'élément à déplacer est amené au-delà de sa position rétractée.

Ainsi, le changement d'état du verrou supplémentaire de l'actionneur ne requiert pas d'actionneur actif dédié (comme un moteur ou électro aimant) et se fait à l'aide du moteur de l'actionneur. Le dispositif est donc compact et léger et plus fiable par nature sans le composant actif dédié et l'électronique de pilotage associée. Au sens de la présente demande, la course de rétraction de l'élément à déplacer commence à sa position déployée et finit à sa position rétractée. La position rétractée de l'élément à déplacer est la position qui est adoptée nominalement par celui-ci lorsque la surface mobile est considérée fermée. Un déplacement de l'élément à déplacer au-delà de sa position rétractée correspond à un déplacement de cet élément d'une quantité s'ajoutant à la course de rétractation et augmentant encore la distance qui le sépare de sa position déployée.

Avantageusement, l'arbre de sortie du moteur est pourvu d'un pignon engrenant avec une couronne dentée intérieurement, et la vis est solidaire en rotation de la couronne. Le dispositif passif de verrouillage comprend alors une butée portée par la couronne et qui est destinée à coopérer avec le verrou, celui-ci étant fonctionnellement relié à l'écrou. Le verrou est agencé pour empêcher une rotation de la couronne lorsque le verrou est dans sa première position. Le verrou agissant directement sur la couronne réductrice, les efforts qu'il doit endurer sont réduits d'un facteur sensiblement égal au rapport de démultiplication de l'engrenage formé par le pignon et la couronne. Ceci améliore encore le poids et la compacité du dispositif passif de verrouillage.

Avantageusement encore, les moyens d'actionnement comprennent des moyens de conversion de mouvement agencés pour convertir un mouvement de l'élément à déplacer au-delà de sa première position rétractée en un mouvement de rotation apte à faire passer le verrou depuis une des première et deuxième positions à l'autre des première et deuxième positions. Cette conversion permet de mettre en œuvre des verrous rotatifs plus compacts, plus légers et donc requérant un travail d'actionnement réduit par rapport aux verrous linéaires qui sont, de plus, sensibles aux vibrations et aux chocs.

Une bonne compacité et légèreté du dispositif est obtenue quand les moyens de conversion de mouvement comprennent une tige montée à coulissement dans un logement central de la vis s'étendant selon l'axe longitudinal, la tige étant fonctionnellement reliée à l'élément à déplacer de manière à passer d'une première position rétractée de la tige à une deuxième position déployée de la tige lorsque l'élément à déplacer est amené au-delà de sa position rétractée. La compacité est encore améliorée lorsque le logement central s'étend sur toute la longueur de la vis, la tige ayant une première extrémité venant en saillie d'une première extrémité de la vis. Alternativement, le logement central est borgne, et la tige comprend une première portion s'étendant dans un alésage traversant la vis selon une direction sensiblement orthogonale à l'axe longitudinal, la première portion de la tige étant reliée à une première douille montée à coulissement sur la vis selon l'axe longitudinal.

La présence de moyens de rappel de la tige à sa première position rétractée permet une bonne linéarité du dispositif passif de verrouillage et une tenue en vibration améliorée (rigidité).

Selon un mode de réalisation préféré, les moyens de conversion de mouvement comprennent un levier monté à rotation sur le bâti, le levier ayant une première extrémité agencée pour être actionnée par la tige lorsqu'elle passe en sa deuxième position déployée. L'utilisation d'un tel levier est particulièrement indiquée lorsque la deuxième extrémité du levier est agencée pour déplacer une deuxième douille montée à coulissement sur un premier arbre solidaire en rotation du verrou.

Préférentiellement, le premier arbre comprend une rainure s'étendant hélicoïdalement sur le premier arbre et la deuxième douille est solidaire d'une première bague cylindrique pourvue d'un suiveur coopérant avec la rainure et un cliquet agencés de manière à ce que :
- un déplacement de la deuxième douille sur le premier arbre dans un premier sens de déplacement provoque une rotation du premier arbre relativement à la deuxième douille, et
- un déplacement de la deuxième douille sur le premier arbre dans un deuxième sens de déplacement opposé au premier ne provoque aucune rotation du premier arbre relativement à la deuxième douille. La réactivité d'un tel actionneur est améliorée lorsqu'il comprend des premiers moyens de rappel en position de la deuxième douille.

Une amélioration supplémentaire de la réactivité du dispositif de verrouillage passif apparaît lorsque le suiveur et la rainure sont agencés de manière à ce que le déplacement de la deuxième douille sur le premier arbre dans le premier sens de coulissement provoque une rotation du premier arbre de 90° relativement à la douille. Alternativement, le suiveur et la rainure sont agencés de manière à provoquer sélectivement un passage du verrou depuis l'une des première et deuxième positions à l'autre des première et deuxième positions lorsque le premier arbre effectue une rotation de 180 degrés.

Alternativement, les moyens de conversion de mouvement peuvent également comprendre un plongeur monté à rotation sur le premier arbre et dont une première extrémité du plongeur coopère avec une première extrémité d'un corps de came lié au premier arbre par une liaison de type glissière. La face extérieure du plongeur comprend au moins une rainure coopérant avec un arrêt solidaire de la deuxième douille, les moyens de conversion de mouvement comprenant également des premiers moyens de rappel en position de la deuxième douille, ainsi que des moyens de poussée du corps de came agencés pour amener la première extrémité du corps de came contre la première extrémité du plongeur.

Préférentiellement, les moyens de conversion de mouvement sont agencés pour convertir un mouvement de l'élément à déplacer au-delà de sa position rétractée en une rotation de la tige. Une telle conversion de mouvement est avantageusement mise à profit lorsque la tige est fonctionnellement liée en rotation à un pignon d'un engrenage d'entrainement d'une roue menante comprenant au moins un doigt destiné à coopérer avec une rainure d'une roue menée de type Croix de Malte, la roue menée étant solidaire en rotation du verrou. Une bonne fiabilité est obtenue lorsque la roue menée comprend quatre rainures et la roue menante comprend deux doigts. Un blocage en position du verrou est efficacement obtenu lorsque la portion de roue menée séparant deux rainures successives dessine un arrondi concave destiné à coopérer avec une portion homologue de la roue menante lors de sa rotation.

Une réalisation particulièrement économique est obtenue lorsque la liaison de type glissière comprend une goupille s'étendant au travers d'une lumière longitudinale du premier arbre. La réactivité du dispositif de verrouillage est améliorée lorsque les premiers moyens de rappel de la douille et/ou les moyens de poussée du corps de came comprennent un ressort hélicoïdal.

Alternativement, le verrou comprend une roue à came solidaire du premier arbre et agissant sur la première extrémité d'un linguet monté à rotation sur le bâti et dont la deuxième extrémité coopère sélectivement avec la butée.

Préférentiellement encore, le verrou est solidaire en rotation du premier arbre et comprend au moins une portion convexe destinée à collaborer avec la butée lorsque le verrou est en première position et une portion concave agencée pour laisser libre la rotation de la couronne lorsque le verrou est en deuxième position. Avantageusement, la portion convexe est une portion de disque dont le centre est situé sur l'axe de rotation du premier arbre.

La fiabilité du dispositif de verrouillage est encore améliorée lorsque l'actionneur comprend des moyens de détection de la position du verrou.

Une bonne compacité et légèreté du dispositif est obtenue quand les moyens d'actionnement comprennent un coulisseau monté à coulissement dans un logement central de la vis s'étendant selon l'axe longitudinal, le coulisseau étant fonctionnellement relié à l'élément à déplacer de manière à passer d'une première position déployée du coulisseau à une deuxième position rétractée du coulisseau lorsque l'élément à déplacer est amené au-delà de sa position rétractée. La compacité est encore améliorée lorsque le coulisseau comprend une première portion s'étendant dans un alésage traversant la vis selon une direction sensiblement orthogonale à l'axe longitudinal, la première portion de la tige étant reliée à une première douille montée à coulissement sur la vis selon l'axe longitudinal.

Préférentiellement, l'actionneur comprend des moyens de rappel du coulisseau vers sa première position déployée agencés pour maintenir le coulisseau en sa deuxième position rétractée pendant une durée prédéterminée avant de rappeler le coulisseau vers sa première position déployée.

Avantageusement, le coulisseau comprend au moins une portion tronconique. Une bonne réactivité du verrou est obtenue lorsque celui-ci comprend au moins une bille.

Avantageusement, le verrou est agencé pour solidariser en rotation l'écrou à la vis lorsqu'il est dans sa première position.

D'autres caractéristiques et avantages de l'invention ressortiront à la lecture de la description qui suit de modes de réalisation non limitatifs de l'invention.

### BREVE DESCRIPTION DES DESSINS

Il sera fait référence aux figures annexées parmi lesquelles :
- la figure 1 est une vue schématique en perspective d'un inverseur de poussée pourvu d'un actionneur selon l'invention ;
- la figure 2 est une vue schématique en coupe d'un actionneur selon l'invention ;
- la figure 3 est une vue schématique partielle en coupe d'un premier mode de réalisation de l'actionneur de l'invention dans une position rétractée;
- la figure 4 est une vue schématique partielle en coupe d'un premier mode de réalisation de l'actionneur de l'invention dans une position rétractée;
- la figure 5 est une vue schématique d'un premier mode de réalisation de l'actionneur de l'invention dans une position rétractée;
- la figure 6 est une vue schématique d'un premier mode de réalisation de l'actionneur de l'invention dans une position déployée;
- la figure 7 est une vue schématique de détail en perspective d'un dispositif passif de verrouillage selon le premier mode de réalisation de l'invention, le dispositif passif de verrouillage étant dans une première position;
- la figure 8 est une vue identique à celle de la figure 7, selon un angle différent ;
- la figure 9 est une vue en perspective éclatée du dispositif passif de verrouillage de la figure 7 ;
- la figure 10 est une vue de détail en perspective partielle du dispositif passif de verrouillage de la figure 7 ;
- la figure 11 est une vue schématique partielle en coupe d'un premier mode de réalisation de l'actionneur de l'invention dans une position de surcourse de rétractation;
- la figure 12 est une vue identique à celle de la figure 7 du dispositif de verrouillage dans une deuxième position ;
- la figure 13 est une vue schématique partielle en coupe d'un deuxième mode de réalisation de l'invention ;
- la figure 14 est une vue schématique partielle en perspective d'un troisième mode de réalisation de l'invention ;
- la figure 15 est une vue schématique partielle en perspective d'un quatrième mode de réalisation de l'invention dans une première position;
- la figure 16 est une vue schématique partielle en perspective du mode de réalisation de la figure 15 dans une deuxième position ;
- la figure 17 est une vue schématique partielle en perspective d'un cinquième mode de réalisation de l'invention dans une première position;
- la figure 18 est une vue en perspective éclatée du dispositif passif de verrouillage de la figure 17 ;
- la figure 19 est une vue de détail en perspective d'un corps de came du mode de réalisation de la figure 17 ;
- la figure 20 est une vue de détail en perspective d'un plongeur du mode de réalisation de la figure 17 ;
- la figure 21 est une vue de détail en perspective d'une tige selon un sixième mode de réalisation de l'invention ;
- la figure 22 est une vue schématique de détail en perspective d'un dispositif passif de verrouillage selon un sixième mode de réalisation de l'invention, le dispositif passif de verrouillage étant dans une première position;
- la figure 23 est une vue schématique de détail en perspective d'un dispositif passif de verrouillage selon un sixième mode de réalisation de l'invention, le dispositif passif de verrouillage étant dans une deuxième position;
- la figure 24 est une vue schématique de détail en perspective d'un dispositif passif de verrouillage selon un septième mode de réalisation de l'invention, le dispositif passif de verrouillage étant dans une première position;
- la figure 25 est une vue identique à celle de la figure 24, selon un angle différent
- la figure 26 est une vue schématique partielle en coupe d'un huitième mode de réalisation de l'actionneur de l'invention dans une position rétractée;
- la figure 27 est une vue schématique de détail en coupe partielle d'un dispositif passif de verrouillage selon le huitième mode de réalisation de l'invention, le dispositif passif de verrouillage étant dans une première position;
- les figures 28 à 36 sont des vues schématiques de détail en coupe partielle du dispositif passif de verrouillage de la figure 29 dans différentes positions.

### DESCRIPTION DETAILLEE DE L'INVENTION

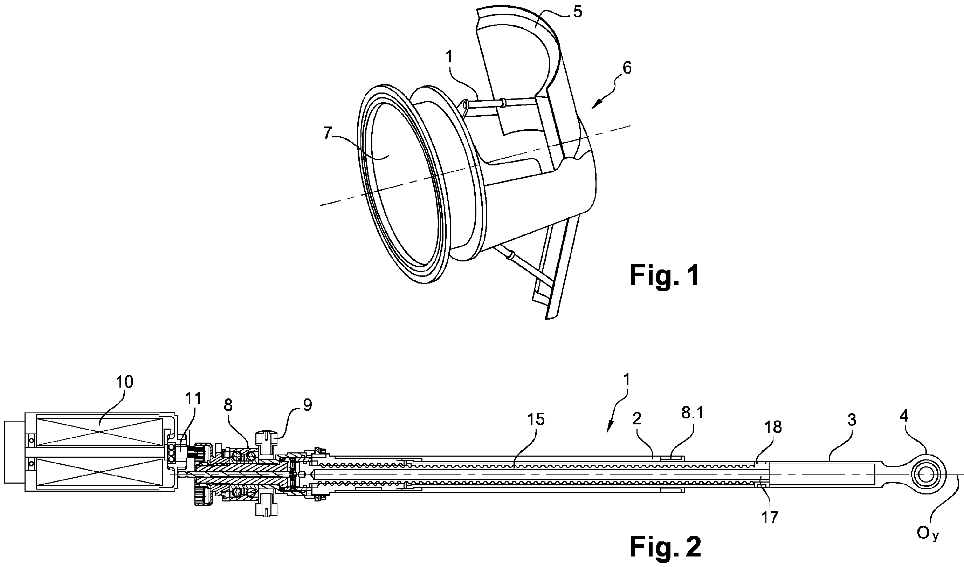

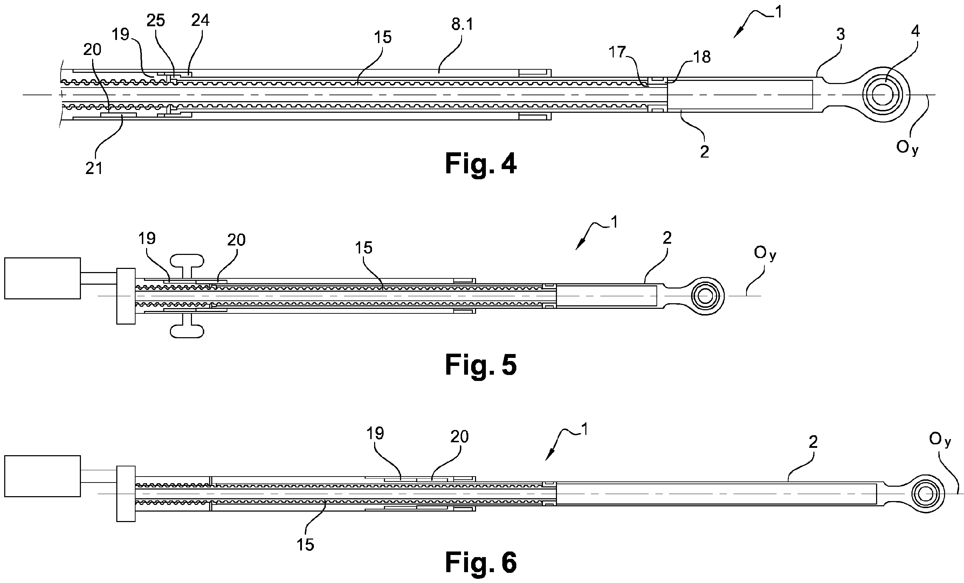

En référence aux figures 1 à 16, l'actionneur électromécanique de l'invention, généralement désigné 1, comprend un tube d'extension 2 dont une première extrémité 3 comporte une chape 4 rotulée reliée à une surface mobile 5 d'un inverseur de poussée 6 d'une nacelle 7. Le bâti 8 de l'actionneur 1 comprend un cardan 9 d'articulation de l'actionneur 1 à la nacelle 7 et un fourreau 8.1 dans lequel le tube d'extension 2 coulisse entre une première position rétractée (représentée en figure 5) et une deuxième position déployée (représentée en figure 6).

L'actionneur 1 comprend également un moteur 10 dont l'arbre de sortie 11 est pourvu d'un pignon 12 engrenant avec une couronne 13 dentée intérieurement. Une première extrémité 14 cannelée d'une vis 15 tubulaire à billes est montée dans un alésage 16 central rainuré de la couronne 13. La vis 15 s'étend selon un axe longitudinal Oy et possède une deuxième extrémité 17 pourvue d'une bague 18 en bronze coopérant avec l'intérieur du tube d'extension 2 pour en guider le coulissement selon l'axe longitudinal Oy. Un écrou 19 à billes est engagé sur la vis 15. Une première rainure 20 réalisée dans la face extérieure 21 de l'écrou 19 reçoit une clavette 22 en bronze qui coopère avec une deuxième rainure 23 du fourreau 8.1 bloquant ainsi la rotation de l'écrou 19 relativement à la vis 15. La première extrémité 19.1 de l'écrou 19 comprend une gorge interne 19.2 chanfreinée intérieurement et la deuxième extrémité 19.3 de l'écrou 19 est reliée par une griffe 24 de liaison à une deuxième extrémité 25 du tube d'extension 2.

La vis 15 est montée à rotation sur le bâti 8 à l'aide d'un palier 26. Ainsi, la rotation du moteur 10 dans un sens ou dans l'autre permet de déplacer l'écrou 19 sur la vis 15 depuis une première position rétractée de l'écrou 19 jusqu'à une deuxième position déployée de l'écrou 19 correspondant respectivement à la position rétractée du tube d'extension 2 (représentée en figure 5) et une position déployée du tube d'extension 2 (représentée en figure 6).

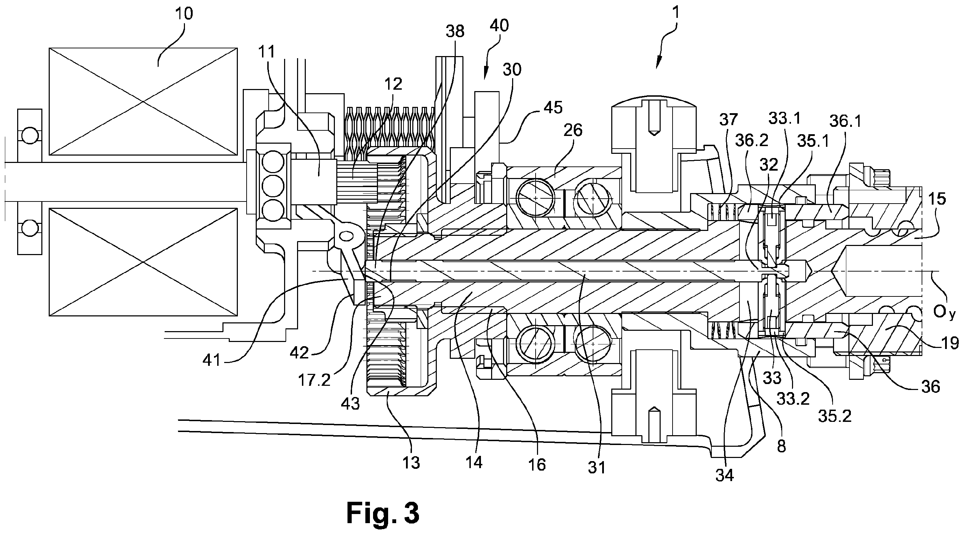

Comme visible en figure 3, la première extrémité 14 de la vis 15 comprend un logement central borgne 30 s'étendant selon l'axe longitudinal Oy et dans lequel une tige 31 est montée à coulissement. La tige 31 comprend, en sa première extrémité 32, une première portion 33 s'étendant dans un alésage 34 traversant la vis 15 selon une direction sensiblement orthogonale à l'axe longitudinal Oy. Les extrémités supérieure 33.1 et inférieure 33.2 (selon la représentation de la figure 3) sont respectivement ajustées dans un alésage supérieur 35.1 et dans un alésage inférieur 35.2 d'une première douille 36 montée à coulissement selon l'axe longitudinal Oy sur la vis 15. Comme visible en figure 3, la douille 36 comprend une première extrémité 36.1 contre laquelle l'écrou 19 vient en contact lorsqu'il est en sa première position rétractée. Un ressort 37 hélicoïdal de compression s'étend entre le bâti 8 et la deuxième extrémité 36.2 de la première douille 36.

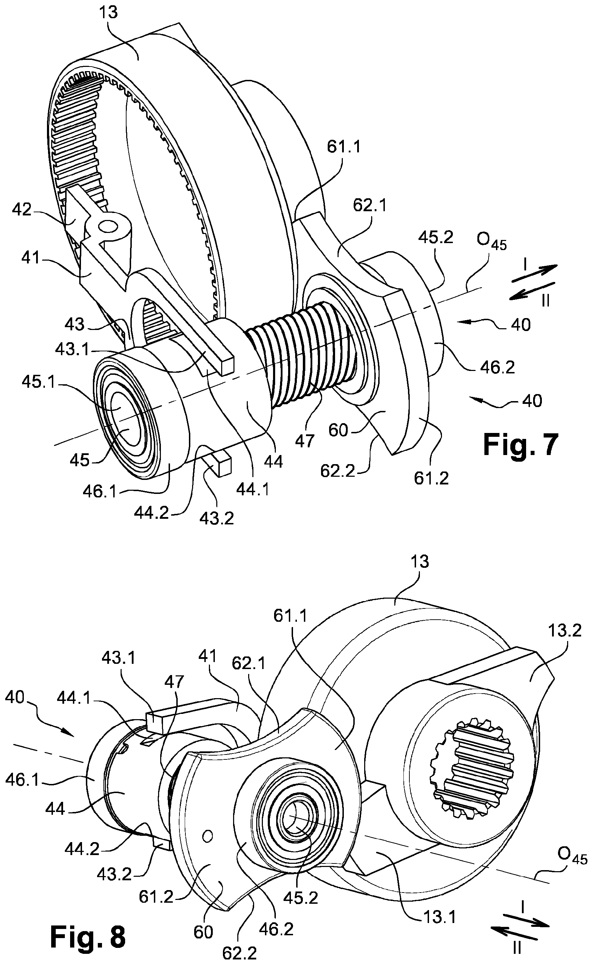

Comme visible en figures 7 à 9, l'actionneur 1 comprend un dispositif 40 de verrouillage passif du tube 2 en position rétractée. Ce dispositif 40 comprend, en sus de la tige 31, un levier 41 monté à rotation sur le bâti 8 et ayant une première extrémité 42 faisant face à une deuxième extrémité 38 de la tige 31. Une deuxième extrémité 43 du levier 41 est en forme de fourche dont les deux dents 43.1 et 43.2 sont respectivement reçues dans deux rainures transversales formant un premier et un deuxième méplat 44.1 et 44.2 sur la surface externe d'une deuxième douille 44 montée à coulissement sur une première extrémité 45.1 d'un premier arbre 45. Les premier et deuxième méplats 43.1 et 43.2 bloquent également une rotation de la deuxième douille 44 relativement au premier arbre 45 autour de l'axe O₄₅ du premier arbre 45. Le premier arbre 45 est monté à rotation sur le bâti 8 à l'aide de deux paliers 46.1 et 46.2 respectivement montés sur ses première et deuxième extrémités 45.1 et 45.2. La deuxième extrémité 45.2 du premier arbre est solidaire en rotation d'un verrou 60 agencé pour coopérer avec l'une ou l'autre de deux butées 13.1 et 13.2 portées par la couronne 13.

Au sens de la présente demande, une butée 13.1 ou 13.2 est portée par la couronne 13 lorsque la dépose de la couronne 13 implique la disparition de la butée 13.1 ou 13.2 ou l'absence de lien mécanique entre la butée 13.1 ou 13.2 et l'actionneur 1.

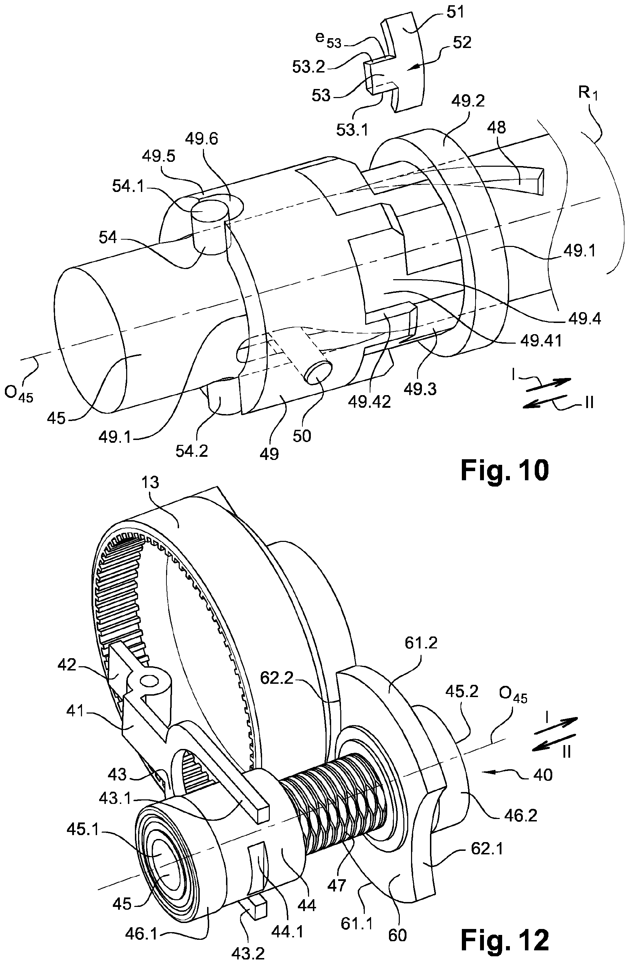

Le verrou 60 comprend, ici, deux portions 61.1 et 61.2 convexes diamétralement opposées et destinées à collaborer alternativement avec l'une ou l'autre des butées 13.1 ou 13.2 lorsque le verrou 60 est dans une première position de verrouillage de la couronne 13 (représentée en figures 7 et 8). Les portions convexes 61.1 et 61.2 sont, ici, des portions d'un disque dont le centre est situé sur l'axe de rotation O₄₅ du premier arbre 45. Le verrou 60 comprend également deux portions 62.1 et 62.2 concaves diamétralement opposées et interposées entre les portions 61.1 et 61.2. Les portions 62.1 et 62.2 sont agencées pour laisser libre la rotation de la couronne 13 lorsque le verrou 60 est dans sa deuxième position, représentée en figure 12. Ainsi, une rotation du premier arbre 45 de 90° autour de son axe de rotation O₄₅ provoque un changement d'état du verrou 60, c'est à dire le passage du verrou 60 d'une de ses première position (verrouillée) ou deuxième position (déverrouillée) à l'autre de ses première position (verrouillée) ou deuxième position (déverrouillée). Le dispositif 40 comprend également un ressort hélicoïdal 47 en appui d'une part sur le verrou 60 et d'autre pat sur la deuxième douille 44 ainsi qu'une rainure 48 qui s'étend hélicoïdalement sur le premier arbre 45. La deuxième douille 44 comprend une première bague 49 cylindrique solidaire de la deuxième douille 44 et dont la surface intérieure 49.1 est pourvue d'un doigt suiveur 50 venant en saillie de la surface intérieure 49.1 pour coopérer avec la rainure 48. Comme plus particulièrement visible en figure 10, la première extrémité 49.2 de la première bague 49 comprend une gorge 49.3 périphérique d'accueil d'un pivot 51 de cliquet 52 dans laquelle débouchent quatre méplats 49.4 d'accueil d'un doigt de cliquet 53 s'étendant selon l'axe O₄₅. Chaque méplat 49.4 comprend une face 49.41 s'étendant dans un plan tangentiel à la première bague 49 au point considéré, et une deuxième face 49.42 s'étendant dans un plan comprenant l'axe O₄₅. Le doigt de cliquet 53 comprend un premier et un deuxième flanc 53.1 et 53.2 s'étendant parallèlement à l'axe O₄₅ et possède une épaisseur e₅₃ supérieure à la hauteur de la deuxième face 49.42 de la première bague 49.

La deuxième extrémité 49.5 de la première bague 49 comprend également deux encoches 49.6 diamétralement opposées destinées à collaborer avec les deux extrémités 54.1 et 54.2 d'une goupille 54 venant en saillie du premier arbre 45. La goupille 54 permet notamment de préserver le verrou 19 de tout risque de rotation lié aux vibrations durant les phases de vol

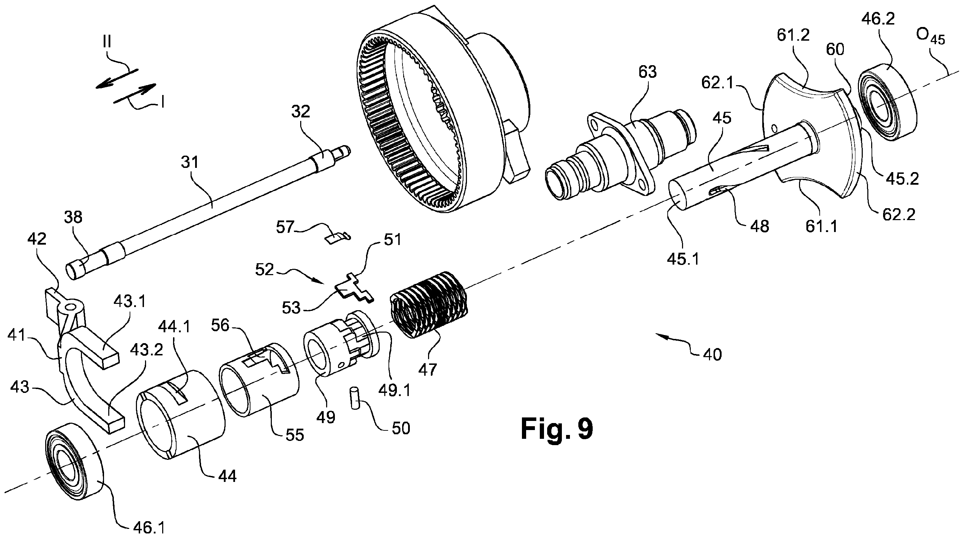

Un chemise 55 cylindrique s'étend autour de la première bague 49 et comporte une fenêtre 56 d'accueil du cliquet 52 ainsi qu'un ressort 57 à lame de rappel du doigt de cliquet 53 vers l'axe O₄₅ du premier arbre 45. Lorsque la deuxième douille 44 est déplacée sur le premier arbre 45 dans un premier sens de déplacement repéré I (ici depuis la première extrémité 45.1 du premier arbre 45 vers la deuxième extrémité 45.2 du premier arbre 45), le doigt suiveur 50 de la première bague 49 entraine une rotation relative de la première bague 49 et du premier arbre 45 dans un premier sens de rotation. La face 49.42 du méplat 49.4 vient en contact avec le premier flanc 53.1 du doigt de cliquet 53 et le deuxième flanc 53.2 du doigt de cliquet 53 vient en butée contre une paroi de la fenêtre 56, solidarisant ainsi en rotation la première bague 49 et la deuxième douille 44. Le déplacement de la deuxième douille 44 sur le premier arbre 45 dans le premier sens de déplacement I entraîne alors une rotation du premier arbre 45 de 90° dans un sens anti horaire selon la vue de la figure 9. Inversement, lors d'un déplacement de la deuxième douille 44, sous l'effet du ressort 47, dans un deuxième sens de déplacement repéré II (ici depuis la deuxième extrémité 45.2 du premier arbre 45 vers la première extrémité 45.1 du premier arbre 45), le doigt suiveur 50 de la première bague 49 entraine une rotation relative de la première bague 49 et du premier arbre 45 dans un deuxième sens de rotation opposé au premier. Le doigt de cliquet 53 est soulevé par la face extérieure de la première bague 49 à l'encontre de l'effort du ressort 57, rendant libre la rotation relative de la première bague 49 par rapport à la deuxième douille 44 selon un le deuxième sens de rotation. Le déplacement de la deuxième douille 44 sur le premier arbre 45 dans le deuxième sens de déplacement II entraîne alors une rotation de la première bague 49 par rapport à la deuxième douille 44 de 90° dans un sens horaire selon la vue de la figure 9 et ce mouvement ne provoque aucune rotation du deuxième arbre 44. Un capteur inductif 63 relié à une unité de commande non représentée détecte la présence d'une des portions 61.1 ou 61.2 afin de déterminer si le verrou 60 est dans sa première ou sa deuxième position. Le verrou 60 est fonctionnellement relié à l'écrou 19 par la chaine cinématique comprenant notamment la première douille 36, la tige 31 et les éléments du dispositif passif de verrouillage 40.

La tige 31, le levier 41 ainsi que la deuxième douille 44 et la rainure 48 du dispositif passif de verrouillage 40 constituent des moyens de conversion de mouvement agencés pour convertir un mouvement du tube 2 au-delà de sa première position rétractée en un mouvement de rotation apte à faire passer le verrou 60 depuis une de ses première position verrouillée ou deuxième position déverrouillée à l'autre de ses première position verrouillée ou deuxième position déverrouillée.

Lorsque le tube 2 est dans sa deuxième position déployée (figure 6), le ressort 37 repousse la première douille 36 dans une position déployée dans laquelle la portion 33 de la tige 31 est maintenue en butée contre une portion de paroi de l'alésage 34 opposée à une deuxième extrémité 17 de la vis 15. Lorsque la première douille 36 est dans cette première position déployée, la tige 31 est dans une première position rétractée dans laquelle la deuxième extrémité 38 de la tige 31 est sensiblement affleurante avec la première extrémité 14 de la vis 15. Le verrou 60 est dans sa deuxième position et laisse libre la rotation de la couronne 13.

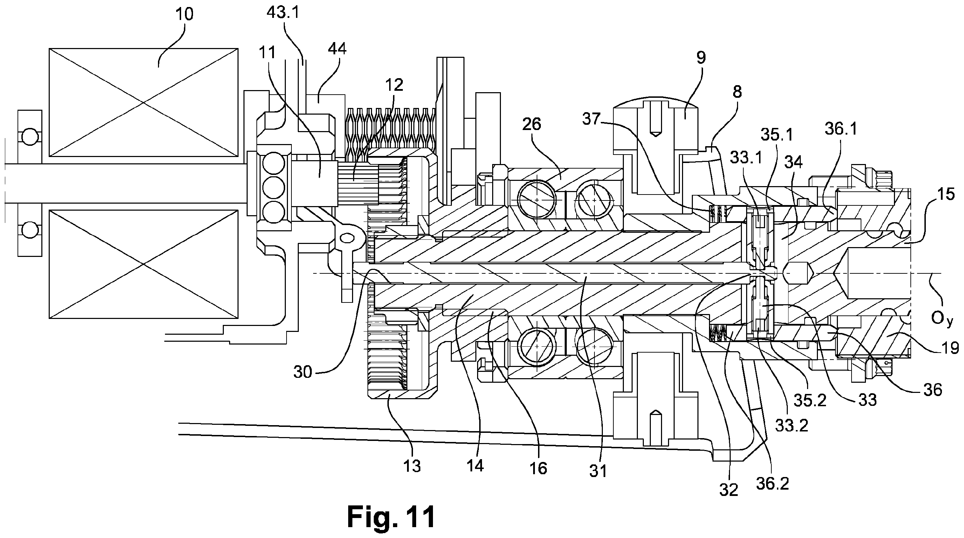

Lorsque le moteur électrique 10 est commandé pour amener le tube d'extension 2 à sa première position rétractée (figures 3 et 5), l'écrou 19 vient au contact de la première extrémité 36.1 de la première douille 36. Le moteur électrique 10 est ensuite commandé pour déplacer le tube d'extension 2 au-delà de sa première position rétractée - c'est-à-dire vers une troisième position de surcourse de rétractation, et l'écrou 19 se déplace vers la gauche selon la représentation de la figure 11, provoquant une translation de la première douille 36 à l'encontre de l'effort du ressort 37. Au cours de ce déplacement, la tige 31 passe de sa première position rétractée (représentée en figure 3) à sa deuxième position déployée (représentée en figure 11) et actionne la deuxième extrémité 42 du levier 41, provoquant un déplacement de la deuxième douille 44 sur le premier arbre 45 dans le premier sens de déplacement I. Ce déplacement de la deuxième douille 44 provoque une rotation du premier arbre 45 et amène le verrou 60 depuis sa deuxième position déverrouillée vers sa première position verrouillée. La portion 61.1 convexe du verrou 60 vient alors faire face à la couronne 13. Parallèlement, l'unité de commande actionne la fermeture du système principal de verrouillage de la surface mobile.

Lorsque le moteur électrique 10 est commandé pour amener le tube d'extension 2 depuis sa troisième position de surcourse de rétractation vers sa première position rétractée, la première douille 36 retourne à sa position déployée sous l'effet du ressort 37 et la tige 31 vient en butée contre la portion de paroi de l'alésage 34 opposée à la deuxième extrémité 17.2 de la vis 15. La tige 31 vient dans sa première position rétractée représentée en figure 3 et libère la première extrémité 42 du levier 41, ce qui provoque le retour de la deuxième douille 44 vers sa position initiale représentée en figure 7. Le verrou 60 demeure dans sa première position de verrouillage de la couronne 13 sous l'effet du cliquet 52 et la butée 13.1 vient reposer sur la portion 61.1 convexe du verrou 60, empêchant une rotation de la couronne 13 qui amènerait à un déploiement du tube 2 (situation représentée en figures 7 et 8). La surface mobile 5 est verrouillée en position fermée par le système de verrou principal et le dispositif passif de verrouillage 40.

Lorsque l'on souhaite déployer l'actionneur 1, on commande une rotation du moteur électrique 10 pour déplacer le tube 2 au-delà de sa première position rétractée-c'est-à-dire vers sa troisième position de surcourse de rétractation, et l'écrou 19 se déplace vers la gauche selon la représentation de la figure 11, provoquant une translation de la première douille 36 à l'encontre de l'effort du ressort 37. Cette rotation du moteur 10 éloigne également la butée 13.1 de la portion 61.1 du verrou 60, facilitant ainsi son dégagement. Au cours du déplacement de l'écrou 19, la tige 31 passe de sa première position rétractée (représentée en figure 3) à sa deuxième position déployée (représentée en figure 11) et actionne la deuxième extrémité 42 du levier 41, provoquant un déplacement de la deuxième douille 44 sur le premier arbre 45 dans le premier sens de déplacement I. Ce déplacement de la deuxième douille 44 provoque une rotation du premier arbre 45 et amène le verrou 60 depuis sa première position verrouillée dans laquelle la portion 61.1 convexe fait face à la couronne 13 à sa deuxième position déverrouillée dans laquelle la portion 62.1 concave du verrou 60 laisse libre la rotation de la couronne 13 (situation représentée en figure 12). L'actionneur 1 est alors déverrouillé et son déploiement peut être commandé. Lors du retour du tube 2 depuis sa troisième position de surcourse de rétractation vers sa première position rétractée, le cliquet 52 maintient le verrou 60 en sa deuxième position.

On obtient ainsi un actionneur 1 pourvu d'un dispositif passif de verrouillage changeant d'état lorsque le tube 2 est amené au-delà de sa position rétractée. Au sens de la présente demande, le dispositif de verrouillage est dit passif car le changement d'état du verrou ne requiert pas d'actionneur dédié, amenant à un dispositif plus compact, plus fiable et plus léger.

Les éléments identiques ou analogues à ceux précédemment décrits porteront une référence numérique respectivement augmentée d'une, deux, trois, quatre, cinq, six et sept centaines dans la description qui suit des deuxième, troisième, quatrième, cinquième sixième et huitième modes de réalisation de l'invention.

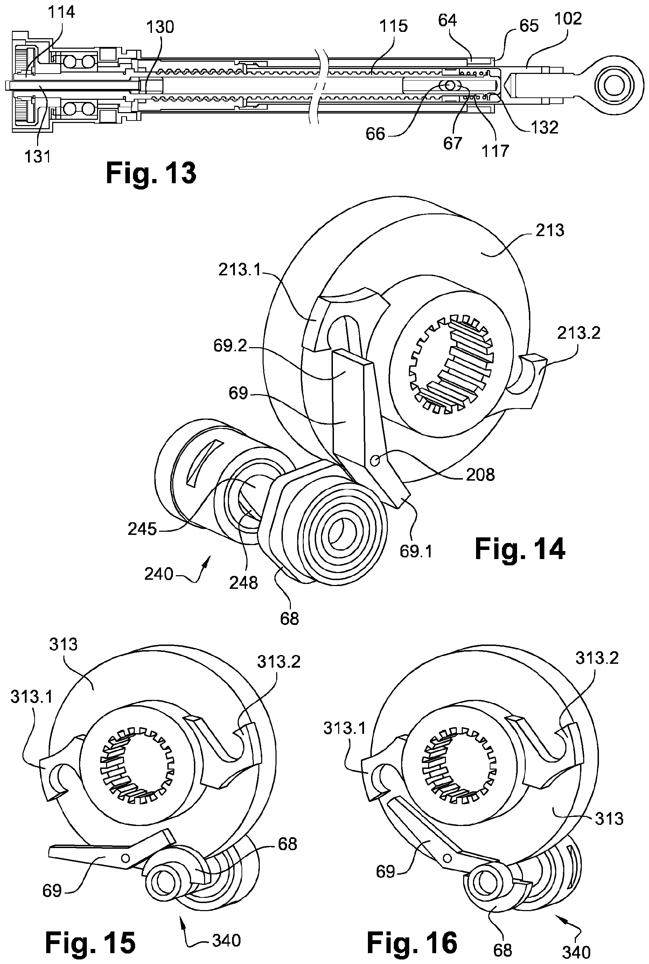

En référence à la figure 13, et selon un deuxième mode de réalisation de l'invention, le logement central 130 s'étend sur toute la longueur de la vis 115 depuis sa première extrémité 114 jusque sa deuxième extrémité 117. La tige 131 s'étend dans le logement central 130 et a une première extrémité 132 qui vient en saillie de la première extrémité 117 de la vis 115. Un ressort 64 hélicoïdal s'étend entre la deuxième extrémité 117 de la vis 115 et une bague d'arrêt 65 solidaire de la première extrémité 132 de la vis 115. Le ressort 64 assure le rappel de la tige 131 en sa première position rétractée. Un axe 66 solidaire de la vis 115 s'étend au travers d'une lumière 67 de la tige 131 pour en limiter la course sous l'effet du ressort 64.

La tige 131, le levier 141 ainsi que la deuxième douille 144 et la rainure 148 du dispositif passif de verrouillage 140 constituent des moyens de conversion de mouvement agencés pour convertir un mouvement du tube 102 au-delà de sa première position rétractée en un mouvement de rotation apte à faire passer le verrou 160 depuis une de ses première position verrouillée ou deuxième position déverrouillée à l'autre de ses première position verrouillée ou deuxième position déverrouillée.

En référence à la figure 14, et selon un troisième mode de réalisation de l'invention, le dispositif passif de verrouillage 240 comprend une roue à came 68 solidaire du premier arbre 245 et agissant sur la première extrémité 69.1 d'un linguet 69 monté à rotation sur le bâti 208 et dont la deuxième extrémité 69.2 coopère sélectivement avec la butée 213.1 ou 213.2 de la couronne 213. La came 68 et la rainure hélicoïdale 248 sont agencées de manière à provoquer sélectivement un passage du verrou 260 depuis l'une de ses première et deuxième positions à l'autre des première et deuxième positions lorsque le premier arbre 245 effectue une rotation de 30 degrés.

La tige 231, le levier 241 ainsi que la deuxième douille 244, la rainure 248, et la roue à came 68 du dispositif passif de verrouillage 240 constituent des moyens de conversion de mouvement agencés pour convertir un mouvement du tube 202 au-delà de sa première position rétractée en un mouvement de rotation apte à faire passer le verrou 260 depuis une de ses première position verrouillée ou deuxième position déverrouillée à l'autre de ses première position verrouillée ou deuxième position déverrouillée.

Les figures 15 et 16 présentent un quatrième mode de réalisation de l'invention dans lequel la came 68 et la rainure hélicoïdale 348 sont agencées de manière à provoquer sélectivement un passage du verrou 360 depuis l'une des première et deuxième positions à l'autre des première et deuxième positions lorsque le premier arbre 345 effectue une rotation de 180 degrés.

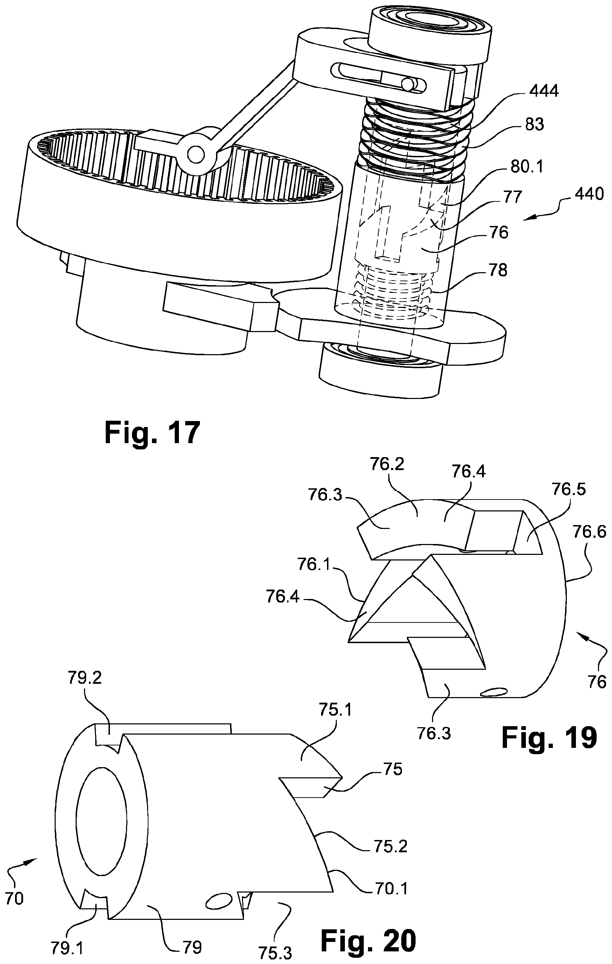

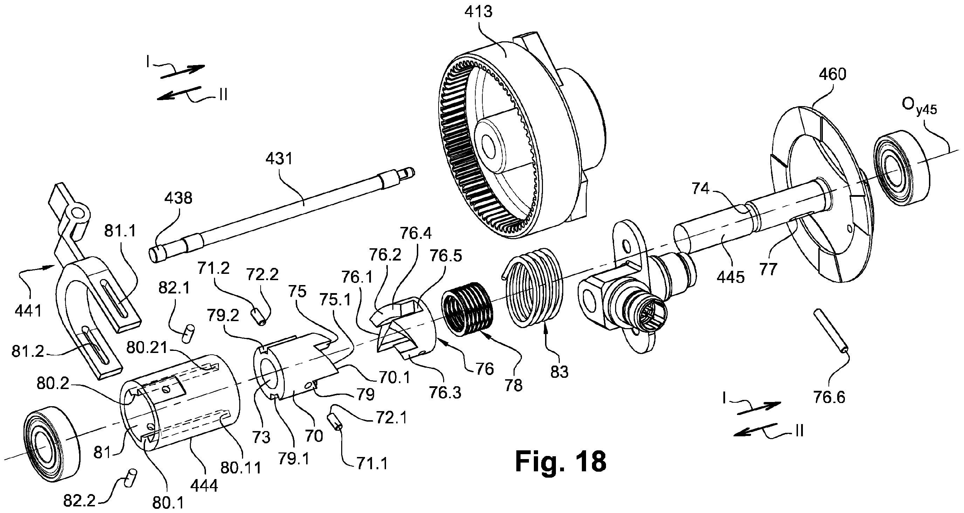

En référence aux figures 17 à 19, et selon un cinquième mode de réalisation de l'invention, les moyens de conversion de mouvement du dispositif passif de verrouillage 440 comprennent un plongeur 70 tubulaire monté à rotation sur le premier arbre 445 à l'aide de deux demi goupilles 71.1 et 71.2 dont les extrémités respectives 72.1 et 72.2 s'étendent radialement en saillie de la surface intérieure 73 du plongeur 70 et coopèrent avec une rainure circonférentielle 74 du premier arbre 445. La première extrémité 70.1 du plongeur 70 dessine un profil de came 75, de type spirale, qui comprend une alternance de dents 75.1, de rampes inclinées 75.2 et de rainures 75.3 faisant face à la première extrémité 76.1 d'un corps de came 76. La première extrémité 76.1 du corps de came 76 dessine un profil de came 76.2, de type spirale, qui comprend une alternance de dents 76.3, de rampes inclinées 76.4 et de rainures 76.5.

Le corps de came 76 est de forme cylindrique tubulaire et est lié au premier arbre 445 par une goupille radiale 76.6 engagée dans une lumière 77 s'étendant dans le premier arbre 445 parallèlement à son axe de rotation O₄₄₅. La première extrémité 70.1 du plongeur 70 est pressée contre la première extrémité 76.1 du corps de came 76 par un ressort hélicoïdal 78 s'étendant autour du premier arbre 445 et s'appuyant d'une part sur la deuxième extrémité 76.6 du corps de came 76 et d'autre part sur le verrou 460. La surface extérieure 79 du plongeur 70 comprend deux rainures 79.1 et 79.2 diamétralement opposées et s'étendant parallèlement à l'axe O₄₄₅. Les rainures 79.1 et 79.2 coopèrent à coulissement respectivement aves des arrêts 80.1 et 80.2 en saillie de la surface intérieure 81 de la deuxième douille 444. Les extrémités biaises 80.11 et 80.21 des arrêts 80.1 et 80.2 sont engagées dans les rainures 76.5 du corps de came 76. Les dents 443.1 et 443.2 de la deuxième extrémité 443 du levier 441 comprennent respectivement une rainure 81.1 et 81.2 coopérant respectivement avec un axe 82.1 et 82.2 en saillie de la deuxième douille 444. Un ressort 83 s'étend autour du plongeur 70, du corps de came 76 et du ressort 78 et vient en appui d'une part sur le verrou 460 et d'autre part sur la deuxième douille 444 pour rappeler la deuxième douille 444 vers la première extrémité 445.1 du premier arbre 444.

Les profils de cames 75 et 76.2 respectifs du plongeur 70 et du corps de came 76 sont agencés de manière à convertir une translation de la deuxième douille 444 dans un premier sens de déplacement axial - ici depuis la première extrémité 445.1 du premier arbre 445 vers sa deuxième extrémité 445.2 - pour provoquer une rotation du premier arbre 445 relativement à la deuxième douille 444. Cette conversion de mouvement se déroule en six étapes. Dans une première étape, le déplacement du levier 441 actionné par la deuxième extrémité 438 de la tige entraine une translation de la deuxième douille 444 sur le premier arbre 445 dans le premier sens I, jusqu'à ce que les extrémités 80.11 et 80.21 des arrêts 80.1 et 80.2 soient respectivement dégagées des rainures 76.5, ce qui libère la rotation du corps de came 76 relativement au plongeur 70. Selon une deuxième étape, le ressort 78 repousse le corps de came 76 contre le profil de came 75. Sous l'effet de la poussée du ressort 78, les inclinaisons respectives des profils de came 76.2 et 75 provoquent une rotation du corps de came 76 relativement au plongeur 70 et à la deuxième douille 444 jusqu'à ce que les faces longitudinales des dents 75.1 du plongeur 70 viennent en contact avec les flancs des dents 76.3 du corps de came 76, soit une rotation de 90 degrés. Selon une troisième étape, lorsque la tige 431 revient en sa première position rétractée, le ressort 83 repousse la deuxième douille 444 vers la première extrémité 445.1 du premier arbre 445 selon le deuxième sens II opposé au premier sens I. L'extrémité des dents 75.1 du plongeur 70 vient affleurer à la surface des dents 76.3 et le contact des extrémités biaises 80.11 et 80.21 des arrêts 80.1 et 80.2 sur les rampes 76.4 du corps de came 76 combiné à la poussée du ressort 83 provoque une rotation du corps de came 76 (et donc du premier arbre 445) relativement à la deuxième douille 444 jusqu'à ce que les faces longitudinales des arrêts 80.1 et 80.2 viennent en contact avec les flancs des dents 76.3 du corps de came 76, soit une rotation supplémentaire de 90 degrés. Le ressort 78 repousse le corps de came 76 vers le plongeur 70 et les arrêts 80.1 et 80.2 viennent s'engager dans les rainures 76.5 bloquant la rotation du premier arbre 445 par rapport à la deuxième douille 444. Le premier arbre 445 est bloqué en position et a effectué une rotation de 180 degrés. A l'issue de cette troisième étape, le verrou 460 a changé d'état.

Selon une quatrième étape, un nouveau passage de la tige 431 à sa deuxième position déployée provoque un déplacement de la deuxième douille 444 dans le premier sens I, jusqu'à ce que les extrémités biaises 80.11 et 80.21 des arrêts 80.1 et 80.2 viennent affleurer avec les extrémités des dents 76.3, libérant la rotation du corps de came 76 par rapport à la deuxième douille 444. Sous la poussée du ressort 78, les extrémités biaises 80.11 et 80.21 des arrêts 80.1 et 80.2 coopèrent avec les rampes inclinées 76.4 du corps de came 76 et provoquent une rotation du corps de came 76 -et donc du premier arbre 445-relativement à la deuxième douille 444 jusqu'à ce que les faces longitudinales des dents 75.1 du plongeur 70 viennent en contact avec les flancs des dents 76.3 du corps de came 76, faisant face aux rainures 76.5 (cinquième étape). Le premier arbre 445 a alors effectué une rotation de 90 degrés relativement à la deuxième douille 444.

Selon une sixième étape, lorsque la tige 431 revient en sa première position rétractée, le ressort 83 repousse la deuxième douille 444 vers la première extrémité 445.1 du premier arbre 445 selon le deuxième sens de déplacement II. L'extrémité des dents 75.1 du plongeur 70 vient affleurer à la surface des dents 76.3 et le contact des extrémités inclinées des arrêts 80.1 et 80.2 sur les rampes 76.4 du corps de came 76 provoque une rotation du corps de came 76 -et donc du premier arbre 445-relativement à la deuxième douille 444 jusqu'à ce que les faces longitudinales des arrêts 80.1 et 80.2 viennent en contact avec les flancs des dents 76.3 du corps de came 76, soit une rotation de 90 degrés. Le ressort 78 repousse le corps de came 76 vers le plongeur 70 et les arrêts 80.1 et 80.2 viennent s'engager dans les rainures 76.5 bloquant la rotation du premier arbre 445 par rapport à la deuxième douille 444. Le premier arbre 445 est bloqué en position et a effectué une rotation de 180 degrés. A l'issue de cette sixième étape, le verrou 460 a changé d'état.

On obtient ainsi un actionneur 401 pourvu d'un dispositif passif de verrouillage 440 changeant d'état lorsque le tube 402 est amené au-delà de sa position rétractée.

La tige 431, le levier 441, la deuxième douille 444, le plongeur 70, le corps de came 76, les arrêts 80.1 et 80.2 ainsi que les ressorts 78 et 83 du dispositif passif de verrouillage 440 constituent des moyens de conversion de mouvement agencés pour convertir un mouvement du tube 402 au-delà de sa première position rétractée en un mouvement de rotation apte à faire passer le verrou 460 depuis une de ses première position verrouillée ou deuxième position déverrouillée à l'autre de ses première position verrouillée ou deuxième position déverrouillée.

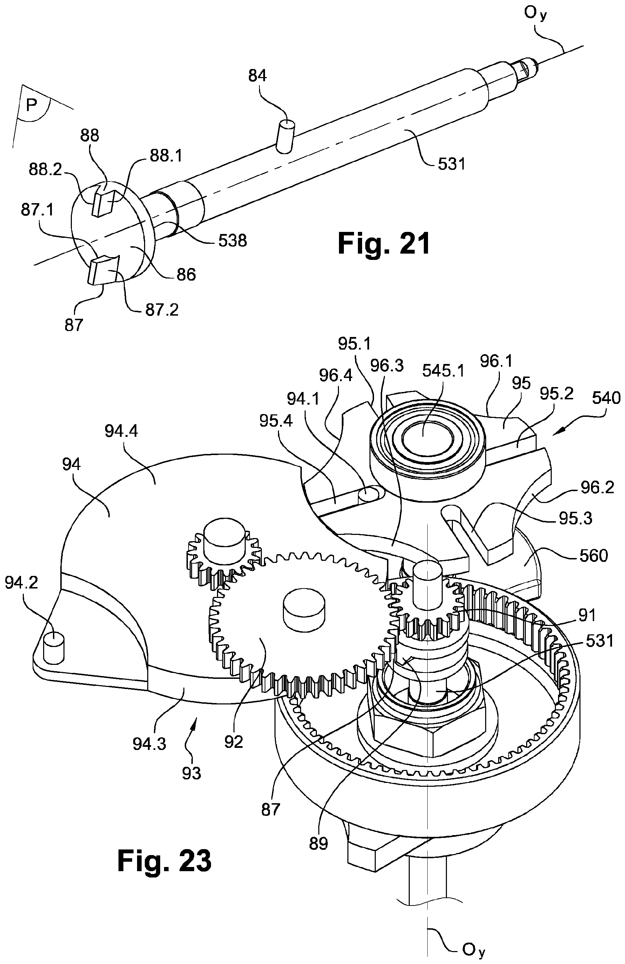

En référence aux figures 21 à 23, et selon un sixième mode de réalisation de l'invention, les moyens de conversion de mouvement du dispositif passif de verrouillage 540 comprennent un doigt 84 venant en saillie de la tige 531 selon une direction sensiblement orthogonale à l'axe longitudinal Oy. Ce doigt 84 coopère avec une rainure 85 hélicoïdale du logement 530 qui dessine une hélice de 180 degrés autour de l'axe longitudinal Oy. La deuxième extrémité 538 de la tige 531 comprend un disque 86 s'étendant dans un plan P sensiblement orthogonal à l'axe longitudinal Oy. Deux premiers crabots 87 et 88 viennent en saillie longitudinale du disque 86 et possèdent respectivement une première face 87.1 et 88.1 s'étendant orthogonalement au plan P et une deuxième face 87.2 et 88.2 formant respectivement un angle aigu avec la première face 87.1 et 88.2. Les premiers crabots 87 et 88 sont agencés pour coopérer avec deux deuxièmes crabots homologues 89 et 90 venant en saillie de la face inférieure d'un pignon 91 porté par le bâti 508 et s'étendant à une distance d du plateau 86. La distance d est telle que les premiers crabots 87 et 88 sont respectivement désengagés des deuxièmes crabots 89 et 90 lorsque la tige 531 est dans sa première position rétractée. Les premiers crabots 87 et 88 sont respectivement engagés avec les deuxièmes crabots 89 et 90 lorsque la tige 531 se déplace jusqu'à sa première position rétractée.

Le pignon 91 engrène avec une roue dentée 92 d'un engrenage d'entrainement 93 coopérant avec une roue menante 94 portant deux doigts 94.1 et 94.2 diamétralement opposés venant en saillie d'un disque 94.3 selon une direction parallèle à l'axe longitudinal Oy. La roue menante 94 coopère avec une roue menée 95 de type Croix de Malte, connue en elle-même, comportant quatre rainures 95.1 à 95.4. La roue menée 95 est solidaire en rotation de la première extrémité 545.1 du premier arbre 545 et qui porte, en sa deuxième extrémité 545.2, le verrou 560.

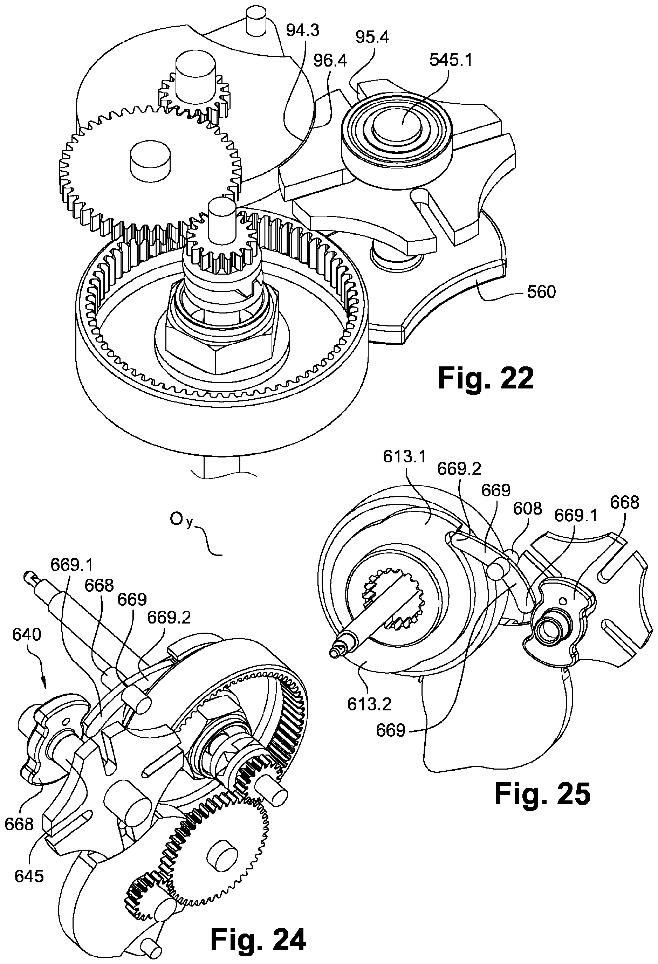

Comme visible en figures 22 et 23, les portions 96.1 à 96.4 de roue menée 95 séparant deux rainures 95.1 à 95.4 successives dessinent un arrondi concave destiné à coopérer avec des portions 94.3 et 94.4 d'arrondi convexe s'étendant entre les doigts 94.1 et 94.2 de la roue menante 94.

En fonctionnement, le verrou 560 étant initialement dans sa position verrouillée représentée en figure 22, le tube 502 est amené au-delà de sa première position rétractée vers sa troisième position de surcourse de rétractation. La tige 531 passe alors de sa première position rétractée à sa deuxième position déployée. Au cours de ce trajet, les premiers crabots 87 et 88 de la tige 531 engagent les deuxièmes crabots 89 et 90 du pignon 91 avant que le cheminement du doigt 84 dans la rainure 85 hélicoïdale provoque la rotation de la tige 531 autour de l'axe longitudinal Oy. La rotation de la tige 531 dans un premier sens a une amplitude de 180 degrés et est transmise au pignon 91, ce qui provoque la rotation de la roue menante 94. Le rapport de transmission de l'engrenage 93 est tel qu'il transforme la rotation de 180 degrés du pignon 91 en une rotation de 90 degrés de la roue menante 94. Le doigt 94.1 engagé dans la rainure 95.4 entraîne en rotation la roue menée 95 et provoque une rotation de 90 degrés de celle-ci, amenant le dispositif de verrouillage 540 dans la configuration représentée en figure 22 et dans laquelle le verrou 560 a changé d'état pour passer de sa position verrouillée à sa position déverrouillée. La portion 96.4 de la roue menée 96 est en contact avec la portion 94.3 de la roue menante 94 et assure une stabilité de la position angulaire du premier arbre 545. Une bague de friction 97 située entre le pignon 91 et le bâti 508 peut améliorer la stabilité en position déverrouillée du verrou 560. Lorsque le tube 502 est amené depuis sa troisième position de surcourse de rétractation vers sa première position rétractée pour être déployé, la tige 531 revient en sa première position rétractée et effectue une rotation de 180 degrés dans un deuxième sens opposé au premier. Cette rotation n'est pas transmise au pignon 31 en raison de l'inclinaison des surfaces 87.2 et 88.2 des premiers crabots 87 et 88 coopérant avec les surfaces homologues des deuxièmes crabots 89 et 90.

Lors de la rétractation du tube 502 depuis sa deuxième position déployée vers sa position rétractée puis son passage au-delà de sa position rétractée, les étapes précédentes se reproduisent et le verrou 560 change d'état pour passer de sa deuxième position déverrouillée à sa première position verrouillée dans laquelle le verrou 560 empêche la rotation de la couronne 513.

La tige 531, ses premiers crabots 87 et 88 ainsi que le doigt 84, la rainure 85, le levier 541, la deuxième douille 544, le pignon 91 et ses deuxièmes crabots 89 et 90, l'engrenage 93 et la roue menée 95 du dispositif passif de verrouillage 540 constituent des moyens de conversion de mouvement agencés pour convertir un mouvement du tube 502 au-delà de sa première position rétractée en un mouvement de rotation apte à faire passer le verrou 560 depuis une de ses première position verrouillée ou deuxième position déverrouillée à l'autre de ses première position verrouillée ou deuxième position déverrouillée.

Une variante du sixième mode de réalisation constituant un septième mode de réalisation est représenté en figures 24 et 25. Le dispositif passif de verrouillage 640 comprend une roue à came 668 solidaire du premier arbre 645 et agissant sur la première extrémité 669.1 d'un linguet 669 monté à rotation sur le bâti 608 et dont la deuxième extrémité 669.2 coopère sélectivement avec la butée 613.1 ou 613.2. La came 668 et la roue menée 95 sont agencées de manière à provoquer sélectivement un passage du verrou 660 depuis l'une des première et deuxième positions à l'autre des première et deuxième positions lorsque le premier arbre 645 effectue une rotation de 90 degrés provoquée par une rotation de la tige 531.

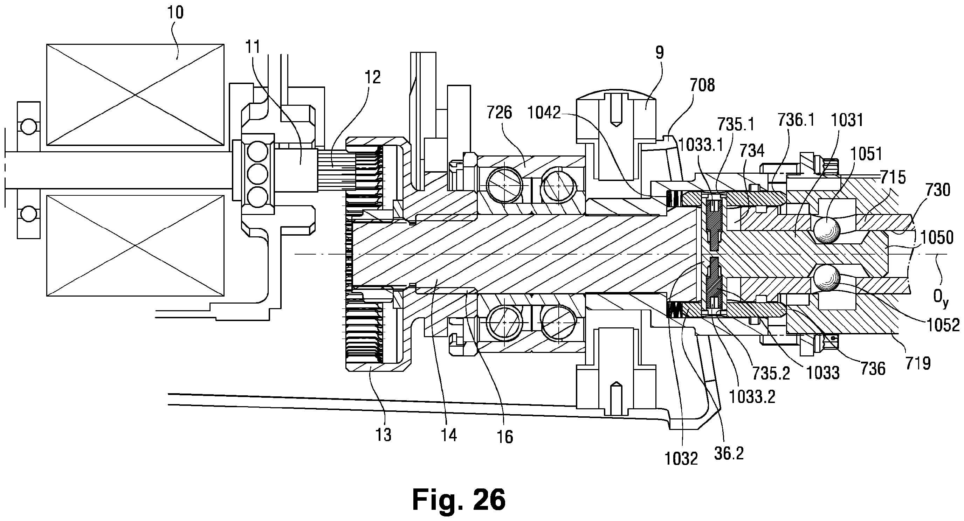

Selon un huitième mode de réalisation et comme visible en figure 26, la vis 715 comprend un logement central 730 s'étendant selon l'axe longitudinal Oy et dans lequel un coulisseau 1031 ferromagnétique est monté à coulissement. Le coulisseau 1031 comprend, en sa première extrémité 1032, une première portion 1033 s'étendant dans un alésage 1034 traversant la vis 715 selon une direction sensiblement orthogonale à l'axe longitudinal Oy. Les extrémités supérieure 1033.1 et inférieure 1033.2 (selon la représentation de la figure 3) de la première portion 1033 sont respectivement ajustées dans un alésage supérieur 735.1 et dans un alésage inférieur 735.2 d'une première douille 736 montée à coulissement selon l'axe longitudinal Oy sur la vis 715.

Le coulisseau 1031 comprend également une portion tronconique 1037 dont la surface extérieure 1037.1 constitue une première face d'une rainure 1038 périphérique. La rainure 1038 comprend également un fond 1039 défini par la face extérieure d'une portion cylindrique 1040 du coulisseau 1031 ainsi qu'une deuxième face 1041.1 faisant face à la première face 1037.1 définie par une deuxième portion tronconique 1041 du coulisseau 1031.

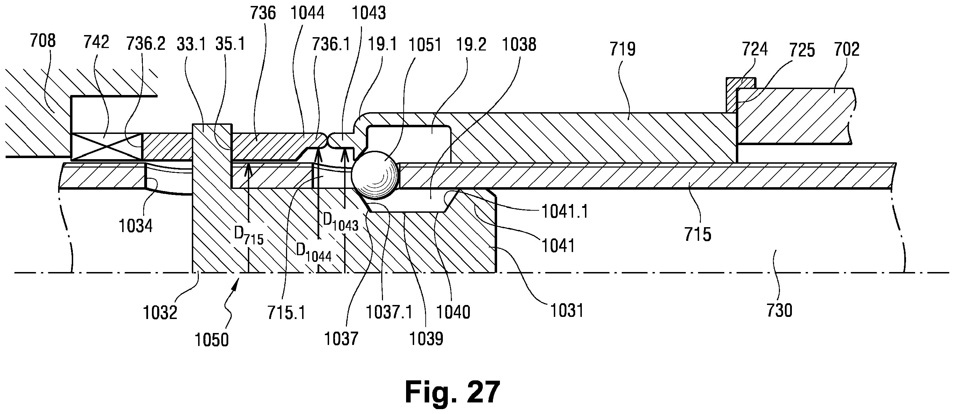

Comme visible en figure 27 et suivantes, la première extrémité 19.1 de l'écrou 19 comprend une gorge interne 19.2 chanfreinée intérieurement et la douille 736 comprend une première extrémité 736.1 contre laquelle l'écrou 719 vient en contact lorsqu'il est en sa première position rétractée. Un anneau 1042 en EPDM, s'étend autour de la vis 715 entre le bâti 708 et la deuxième extrémité 736.2 de la première douille 736. Une première portion 1043 annulaire d'appui vient en saillie longitudinale de la première extrémité 19.1 de l'écrou 19. Cette première portion 1043 a un diamètre intérieur D₁₀₄₃ supérieur au diamètre extérieur D₇₁₅ de la vis 715. Une deuxième portion 1044 annulaire d'appui vient en saillie longitudinale de la première extrémité 736.1 de la première douille 736. Cette deuxième portion 1044 a un diamètre intérieur D₁₀₄ supérieur au diamètre extérieur D₇₁₅ de la vis 715 et est agencé pour venir en appui sur la première portion 1043 lorsque l'écrou 719 est en sa première position rétractée, comme représenté en figure 27.

L'actionneur 1 comprend un dispositif 1050 de verrouillage passif du tube 702 en position rétractée. Ce dispositif 1050 comprend, en sus du coulisseau 1031, de la première douille 736 et de l'anneau 1042, deux billes 1051 et 1052 respectivement reçues dans une première lumière débouchante 15.1 et une deuxième lumière débouchante 15.2 de la vis 715. Les billes 1051 et 1052 coopèrent avec le coulisseau 1031 pour venir sélectivement dans une première position dans laquelle les billes 1051 et 1052 viennent partiellement en saillie de la surface extérieure 15.3 de la vis 715 ou dans une deuxième position dans laquelle les billes 1051 et 1052 viennent en retrait de la surface extérieure 15.3 de la vis 715.

Le coulisseau 1031, la première douille 36 et l'anneau 1042 du dispositif passif de verrouillage 1050 constituent des moyens d'actionnement des billes 1051 et 1052 agencés pour sélectivement faire passer les billes 1051 et 1052 depuis une de leurs première position ou deuxième position à l'autre de leurs première position ou deuxième position.

Le fonctionnement de l'actionneur 701 de l'invention va être détaillé en référence aux figures 27 à 36. Lorsque le tube 702 est dans sa première position rétractée (figure 5), l'anneau 1042 repousse la première douille 736 dans une position déployée dans laquelle la portion 1033 du coulisseau 1031 est maintenue en butée contre une portion de paroi de l'alésage 734 opposée à la première extrémité 714 de la vis 715. Lorsque la première douille 736 est dans cette première position déployée, le coulisseau 1031 est dans une première position déployée dans laquelle les billes 1051 et 1052 sont dans leur première position partiellement en saillie de la surface extérieure 15.3 de la vis 715. Dans cette première position, les billes 1051 et 1052 s'étendent partiellement dans la rainure 19.2 et bloquent une rotation relative de la vis 715 et de l'écrou 719 qui amènerait à une translation de l'écrou 719 vers la droite selon la représentation de la figure 27, c'est-à-dire un déploiement du tube 702. Les billes 1051 et 1052 constituent donc un verrou 760, ici dans sa première position verrouillée de blocage de la rotation relative de la vis 715 et de l'écrou 719. Il est à remarquer que la rainure 19.2 a une largeur sensiblement égale à deux fois le diamètre des billes 1051 et 1052.

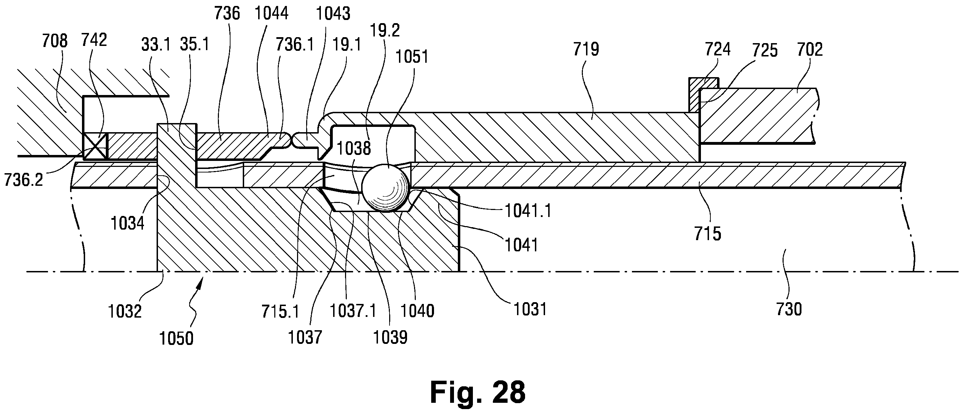

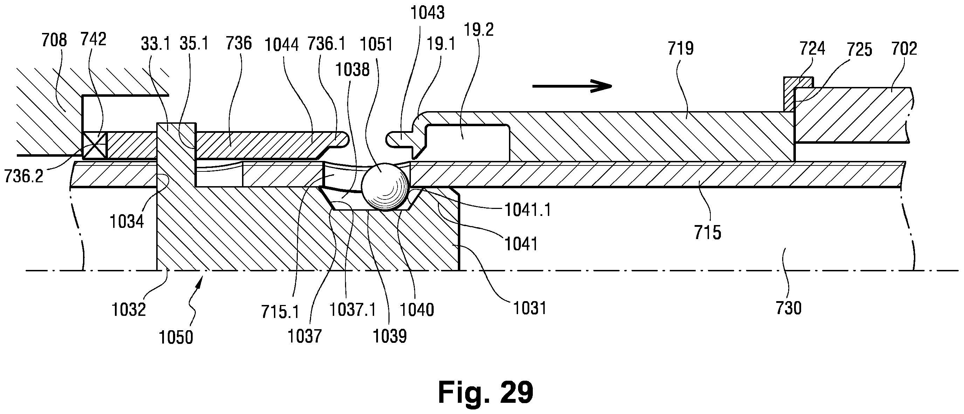

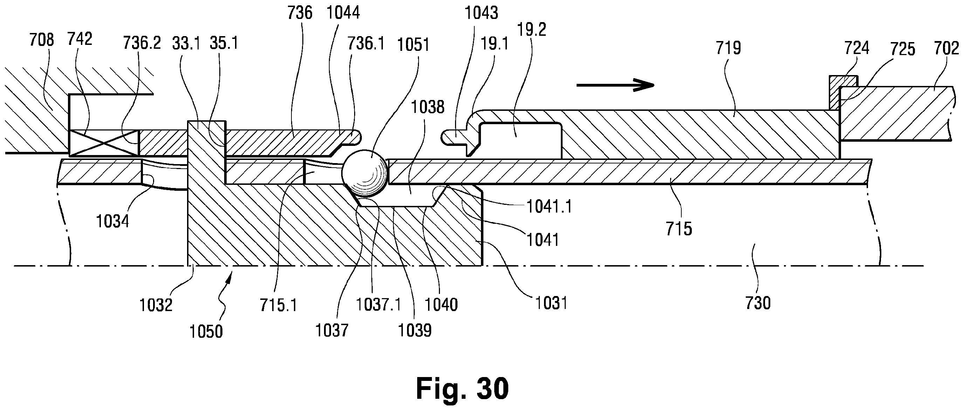

Lorsque l'on souhaite amener le tube d'extension 702 jusqu'à sa première position déployée (figure 6), le moteur électrique 710 est commandé pour déplacer le tube d'extension 702 au-delà de sa première position rétractée - c'est-à-dire vers une troisième position de surcourse de rétraction, et l'écrou 719 se déplace vers la gauche selon la représentation de la figure 27, provoquant une translation de la première douille 736 à l'encontre de l'effort de l'anneau 1042. Au cours de ce déplacement, le coulisseau 1031 passe de sa première position déployée (représentée en figure 27) à sa deuxième position rétractée (représentée en figure 28). Les billes 1051 et 1052 ne sont plus en contact avec la face 1037.1 et viennent au contact du fond 1039 de rainure 1038 du coulisseau 1031, passant dans leur deuxième position déverrouillée représentée en figure 28. Parallèlement, l'unité de commande actionne l'ouverture du système principal de verrouillage de la surface mobile 705. Le moteur électrique 710 est ensuite commandé pour amener le tube d'extension 702 depuis sa troisième position de surcourse de rétraction vers sa deuxième position déployée, l'écrou 719 se déplace sur la vis 715 (vers la droite selon la représentation de la figure 29) et la première portion 1043 de l'écrou 719 se sépare de la deuxième portion 1044 de la première douille 736. L'anneau 1042 n'est plus soumis à la force de compression de la première douille 736 mais ne retourne pas immédiatement à sa forme initiale en raison des propriétés viscoélastiques de l'EPDM qui introduisent une « temporisation » au retour à la forme initiale de l'anneau 1042. Le matériau de l'anneau 1042 est choisi de manière à ce que la gorge 19.2 de l'écrou 719 ne soit plus en face des lumières 15.1 et 15.2 de la vis 715 lorsque l'anneau 1042 revient à sa forme initiale et repousse la première douille 736 à sa position déployée. Dans cette configuration, les billes 1051 et 1052 viennent en saillie de la vis 715 (figure 30).

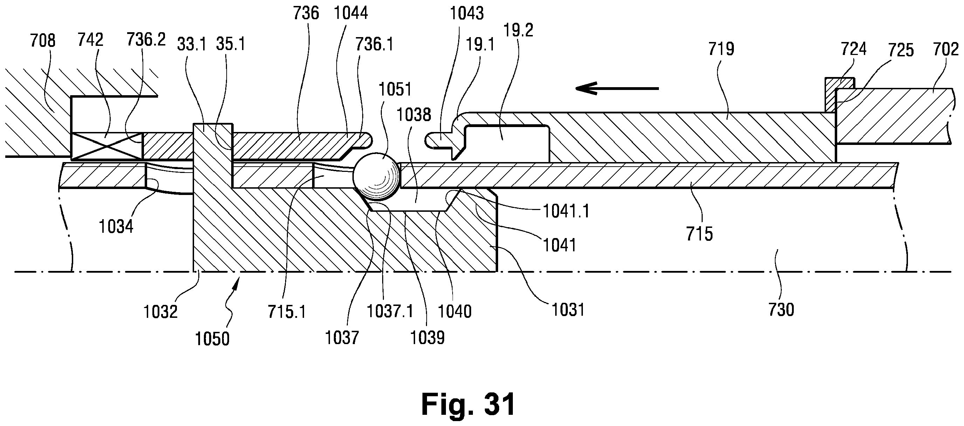

Lorsque l'on souhaite rétracter l'actionneur 701, on commande une rotation du moteur électrique 710 pour déplacer le tube 702 depuis sa deuxième position déployée jusqu'à sa première position rétractée, et l'écrou 719 se déplace vers la gauche selon la représentation de la figure 31.

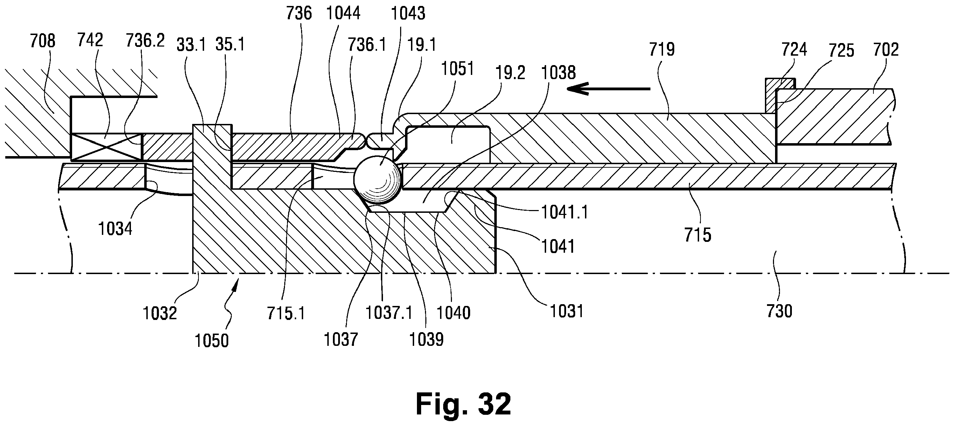

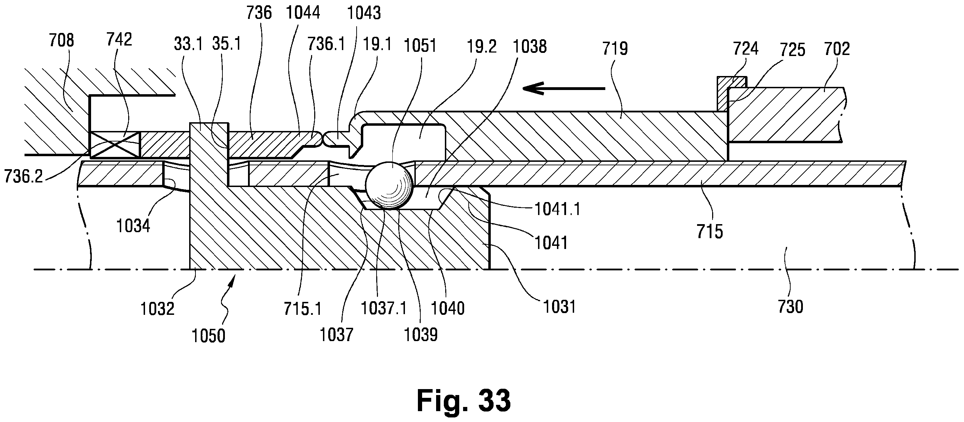

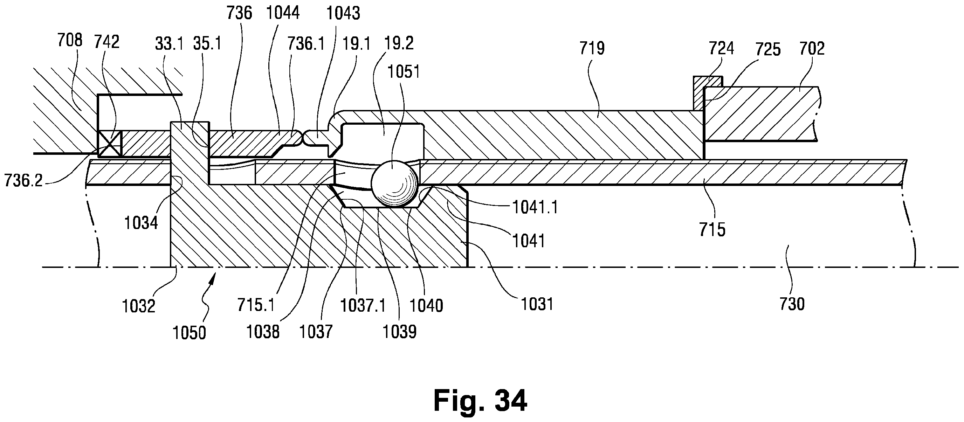

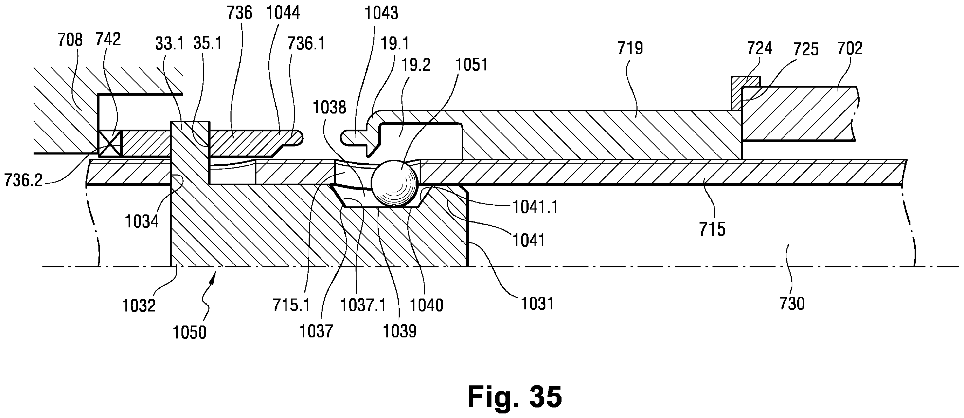

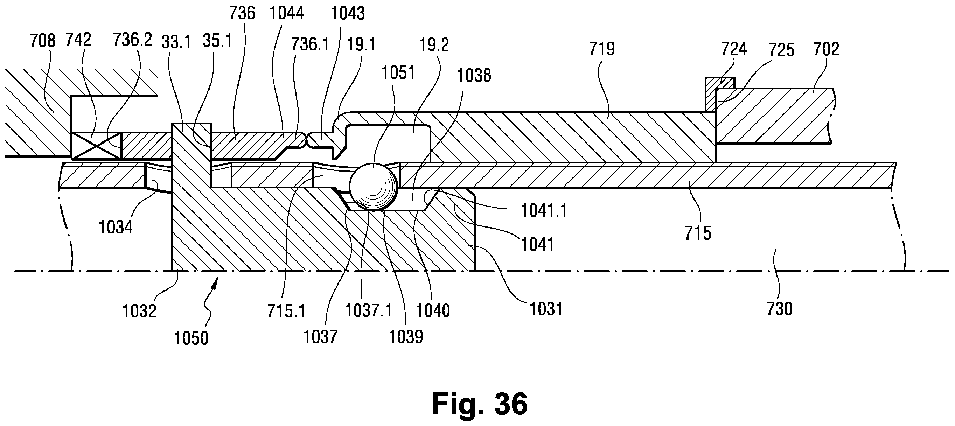

Une fois arrivé peu avant sa première position rétractée (situation représentée en figure 32), la première portion 1043 de l'écrou 719 vient au contact de la deuxième portion 1044 de la première douille 736. L'écrou 719 poursuit sa translation vers sa première position rétractée et provoque une translation de la première douille 736 à l'encontre de l'effort de l'anneau 1042, vers la gauche selon la représentation de la figure 32. Le coulisseau 1031 passe alors dans sa deuxième position rétractée et les billes 1051 et 1052 passent dans leur deuxième position (figure 33). Dans cette position, la rainure 19.2 est à l'aplomb des lumières 15.1 et 15.2. On commande alors une rotation du moteur électrique 710 pour déplacer le tube 702 vers sa troisième position de surcourse de rétraction, et l'écrou 719 se déplace vers la gauche selon la représentation de la figure 33, provoquant une translation de la première douille 736 à l'encontre de l'effort de l'anneau 1042. Parallèlement, l'unité de commande actionne la fermeture du système principal de verrouillage de la surface mobile 705. On commande ensuite la rotation du moteur 710 de manière à amener le tube 702 depuis sa troisième position de surcourse de rétraction jusqu'à sa première position rétractée (figures 34 et 35). Une fois que le délai nécessaire au retour de l'anneau 1042 dans sa position initiale est écoulé, le coulisseau 1031 repasse dans sa première position déployée (représentée en figure 36). Les billes 1051 et 1052 viennent dans leur première position en saillie de la surface extérieure 15.3 de la vis 715 et bloquent la rotation relative de la vis 715 et de l'écrou 719 qui amènerait à une translation de l'écrou 719 vers la droite selon la représentation de la figure 27, c'est-à-dire un déploiement du tube 702.

On obtient ainsi un actionneur 701 pourvu d'un dispositif passif de verrouillage changeant d'état lorsque le tube 702 est amené au-delà de sa position rétractée. Au sens de la présente demande, le dispositif de verrouillage est dit passif car le changement d'état du verrou ne requiert pas d'actionneur dédié, amenant à un dispositif plus compact, plus fiable et plus léger.

Bien entendu, l'invention n'est pas limitée aux modes de réalisation décrits mais englobe toute variante entrant dans le champ de l'invention telle que définie par les revendications.

En particulier,
- bien qu'ici l'écrou soit lié à un tube d'extension, l'invention s'applique également à d'autres types d'éléments à déplacer comme par exemple une poulie, un flexible ou une courroie ;
- bien qu'ici l'actionneur comprenne un arbre pourvu d'un pignon engrenant avec une couronne, l'invention s'applique également à d'autres types de pignon comme par exemple un pignon à denture externe ou conique, ou sous la forme d'une denture taillée sur l'arbre de sortie ;
- bien qu'ici la vis soit une vis à bille, l'invention s'applique également à d'autres types de vis comme par exemple une vis à filet plats, à recirculation de billes ou à rouleaux ;
- bien qu'ici la vis soit montée sur la couronne par un assemblage à rainures et cannelures, l'invention s'applique également à d'autres moyens de solidarisation de l'arbre avec la vis comme par exemple le soudage, le brasage, le clavetage ou l'emmanchement à force ;
- bien qu'ici la première extrémité de la vis soit pourvue d'une bague en bronze, l'invention s'applique également à d'autres types de guidage en translation de l'arbre comme par exemple une douille en téflon, un patin en PTFE, un guidage à billes ou par un durcissement superficiel des surfaces en contact ;
- bien qu'ici la face extérieure de l'écrou comprenne une clavette coopérant avec une rainure du fourreau, l'invention s'applique également à d'autres moyens d'anti rotation de l'écrou comme par exemple des rouleaux solidaires de l'écrou et engagés dans des lumières du fourreau ou une languette solidaire du fourreau engagée dans une rainure de l'écrou ;
- bien qu'ici l'écrou soit pourvu de moyens d'anti-rotation internes, l'invention s'applique également à un actionneur dépourvu de moyens d'anti-rotation internes comme par exemple un blocage en rotation réalisé au niveau du tube d'extension via la liaison à l'élément dont l'actionnement est requis (surface mobile dans le mode de réalisation décrit) ;
- bien qu'ici l'écrou soit relié à l'élément à déplacer au moyen d'une griffe, l'invention s'applique également à d'autres moyens de liaison de l'écrou à l'élément à déplacer comme par exemple une liaison vissée, emmanchée, soudée ou clavetée ;
- bien qu'ici les extrémités du levier soient reçues dans des méplats formés sur la deuxième douille, l'invention s'applique également à d'autres moyens de blocage de la rotation de la deuxième douille par rapport au premier arbre comme par exemple une liaison entre le levier et la deuxième douille à l'aide d'un axe, une rotule, ou bien une paire de rouleaux solidaires de la deuxième douille et coopérant avec des lumières du bâti ;
- bien qu'ici un ressort de compression s'étende entre le bâti et la deuxième extrémité de a deuxième douille, l'invention s'applique également à d'autres types de moyens de rappel en position de la deuxième douille comme par exemple d'autres moyens élastique tels qu'un bloc élastomère ou des rondelles Belleville, un amortisseur viscoélastique ou d'autres moyens de rappel comme par exemple un aimant ou un dispositif gravitaire ;
- bien qu'ici la deuxième extrémité du levier soit en forme de fourche, l'invention s'applique également à d'autres types d'agencement de la deuxième extrémité du levier pour déplacer la deuxième douille comme par exemple un ou plusieurs axes engagés dans des lumières, une encastrement élastique ou une rotule ;
- bien qu'ici le verrou coopère avec deux ou quatre butées sur la couronne, l'invention s'applique également à un nombre de butées différents comme par exemple une seule, trois ou plus de quatre. De la même façon, le verrou peut posséder un nombre quelconque de portions convexes et/ou concaves comme une seule portion, trois ou plus de quatre ;
- bien qu'ici le cliquet soit reçu dans une bague entourée d'une chemise, l'invention s'applique également à d'autres types de cliquets comme par exemple des cliquets à dent et ressort, des cliquets à billes et gorge ;
- bien qu'ici l'écrou affleure avec l'extrémité de la tige lorsqu'il est en position rétractée, l'invention s'applique également à d'autres configurations comme par exemple une tige disposant d'une distance de garde de sécurité, en retrait dans le logement central ou en saillie de celui-ci ;
- bien qu'ici le corps de came soit lié au premier arbre par une goupille radiale engagée dans une lumière longitudinale du premier arbre, l'invention s'applique également à d'autres moyens de réaliser une liaison glissière comme par exemple une lumière réalisée dans le corps de came et un axe solidaire de l'arbre. De la même façon, l'invention s'applique également à une inversion cinématique du mode de réalisation dans lequel le corps de came est solidaire de la deuxième douille et le plongeur est monté en liaison glissière sur l'arbre ;
- bien qu'ici les changement d'état du verrou ait lieu pour des rotation du premier arbre ou de la tige de 30, 90 degrés ou 180 degrés, l'invention s'applique également à d'autres valeurs de l'angle de rotation comme par exemple 60 degrés, moins ou plus ;
- bien qu'ici la tige comprenne un doigt coopérant avec une rainure solidaire du logement central, l'invention s'applique également à d'autres types de moyens de conversion de mouvement pour convertir une translation de la tige en rotation comme par exemple deux filets hélicoïdaux, un doigt en saillie du logement et une rainure réalisée dans la tige ;
- bien qu'ici la roue menant comprenne deux doigts coopérant avec quatre rainure de la roue menée, l'invention s'applique également à une roue menée comprenant un seul doigt ou plus de deux et/ou à une roue menant comportant une, deux, trois rainures ou plus de quatre ;
- bien qu'ici l'actionneur soit pourvu d'un capteur inductif pour détecter la position du verrou, l'invention s'applique également à d'autres types de moyens de détection de la position du verrou comme par exemple un codeur sur l'arbre, un capteur optique ou aucun capteur ;
- bien qu'ici un anneau EPDM s'étende entre le bâti et la deuxième extrémité de la deuxième douille, l'invention s'applique également à d'autres types de moyens de rappel en position du coulisseau agencés pour maintenir celui-ci en sa deuxième position rétractée pendant une durée déterminée avant de rappeler le coulisseau vers sa première position déployée comme par exemple d'autres types d'élastomères, un amortisseur à gaz, un ressort couplé à un amortisseur, ou une temporisation par amortisseur hydraulique ;
- bien qu'ici le verrou comprenne deux billes, l'invention s'applique également à un nombre de billes différent comme par exemple une seule, trois ou plus de quatre. De la même façon, d'autres types de verrous peuvent être utilisés comme des dents, des rouleaux ou des cames actionnés par le coulisseau;
- bien qu'ici le verrou réalise un blocage de l'écrou sur la vis ou de la vis sur le bâti, l'invention s'applique également à d'autres moyens d'empêcher une rotation relative de la vis et de l'écrou comme par exemple un blocage de l'arbre moteur par rapport au bâti ou du tube d'extension par rapport à la vis ou au bâti ;
- bien qu'ici les billes soient repoussées par un chanfrein de la rainure, l'invention s'applique également à d'autres modes de rappel des billes au fond de la rainure comme par exemple une bague élastique, un ressort s'étendant entre la bille et le coulisseau, l'utilisation de la force de gravité ou une cage de rétention des billes;
- bien qu'ici l'actionneur comprenne un cardan, l'invention s'applique également à d'autres types de liaison de l'actionneur à l'aéronef, comme par exemple une rotule.

Les solutions développées dans les divers modes de réalisations peuvent être combinées entre elles afin d'obtenir des cumuls ou des synergies d'effets. Par exemple, chaque mode de réalisation peut se voir doté de moyens de détection de l'état du verrou bien que seul un mode de réalisation ne mentionne la présence de tels moyens. Il en va de même pour les configurations de verrou, de logement central, etc....

## Revendications

1. Actionneur électromécanique (1, 101, 201, 301, 401, 501, 601, 701) verrouillable comprenant :
- un bâti (8, 108, 208, 308, 408, 508, 608) ;
- un moteur (10) dont l'arbre de sortie (11) est solidaire en rotation d'une vis (15, 115, 215, 315, 415, 515, 615, 715) s'étendant selon un axe longitudinal (Oy ;
- un écrou (19, 719) engagé sur la vis (15, 115, 215, 315, 415, 515, 615, 715) et pourvu de moyens de liaison (24) à un élément à déplacer (2, 102, 202, 302, 402, 502, 602, 702), l'écrou (19) se déplaçant sur la vis (15, 115, 215, 315, 415, 515, 615, 715) depuis une première position rétractée de l'écrou (19, 719) jusqu'à une deuxième position déployée de l'écrou (19, 719) correspondant respectivement à une première position rétractée de l'élément à déplacer (2, 102, 202, 302, 402, 502, 602, 702) et une deuxième position déployée de l'élément à déplacer (2, 102, 202, 302, 402, 502, 602, 702);
- un dispositif de verrouillage (40, 140, 240, 340, 440, 540, 640, 1050) en position rétractée de l'élément à déplacer (2, 102, 202, 302, 402, 502, 602, 702) ;
le dispositif de verrouillage (40, 140, 240, 340, 440, 540, 640, 1050) comprenant un des moyens d'actionnement d'un verrou (60, 160, 260, 360, 460, 560, 660, 760) pouvant sélectivement adopter une première position dans laquelle le verrou (60, 160, 260, 360, 460, 560, 660, 760) empêche une rotation relative de la vis (15, 115, 215, 315, 415, 515, 615, 715) et de l'écrou (19, 719) qui amènerait à un déploiement de l'élément à déplacer (2, 102, 202, 302, 402, 502, 602, 702) et une deuxième position dans laquelle la rotation relative de la vis (15, 115, 215, 315, 415, 515, 615, 715) et de l'écrou (19, 719) est libre,
**caractérisé en ce que** le dispositif de verrouillage (40, 140, 240, 340, 440, 540, 640, 1050) est un dispositif passif et est agencé pour que :
- lorsque le verrou (60, 160, 260, 360, 460, 560, 660, 760) est dans sa première position, le verrou (60, 160, 260, 360, 460, 560, 660, 760) passe de la première position à la deuxième position lorsque l'élément à déplacer (2, 102, 202, 302, 402, 502, 602) est amené au-delà de sa position rétractée,
- lorsque le verrou (60, 160, 260, 360, 460, 560, 660, 760) est dans sa deuxième position, le verrou (60, 160, 260, 360, 460, 560, 660, 760) passe de la deuxième position à la première position lorsque l'élément à déplacer (2, 102, 202, 302, 402, 502, 602) est amené au-delà de sa position rétractée.

2. Actionneur électromécanique (1, 101, 201, 301, 401, 501, 601) selon la revendication 1, dans lequel les moyens d'actionnement comprennent des moyens de conversion de mouvement (31, 41, 44, 48, 68, 70, 76, 78, 80.1, 80.2, 83, 84, 85, 87, 88, 89, 90, 91, 93, 95, 131, 141, 144, 148, 231, 241, 244, 248, 331, 341, 344, 431, 441, 444, 531, 541, 544, 631, 645, 668) agencés pour convertir un mouvement de l'élément à déplacer (2, 102, 202, 302, 402, 502, 602, 702) au-delà de sa première position rétractée en un mouvement de rotation apte à faire passer le verrou (60, 160, 260, 360, 460, 560, 660, 760) depuis une des première et deuxième positions à l'autre des première et deuxième positions.

3. Actionneur électromécanique (1, 101, 201, 301, 401, 501, 601) selon la revendication 2, dans lequel l'arbre de sortie (11) du moteur (10) est pourvu d'un pignon (12) engrenant avec une couronne (13, 113, 213, 313, 413, 513, 613) dentée intérieurement, et la vis (15, 115, 215, 315, 415, 515, 615) est solidaire en rotation de la couronne (13, 113, 213, 313, 413, 513, 613),
le dispositif passif de verrouillage (40, 140, 240, 340, 440, 540, 640) comprenant une butée (13.1, 13.2, 113.1, 113.2, 213.1, 213.2, 313.1, 313.2, 413.1, 413.2, 513.1, 513.2, 613.1, 613.2) portée par la couronne (13, 113, 213, 313, 413, 513, 613) et qui est destinée à coopérer avec le verrou (60, 160, 260, 360, 460, 560, 660), le verrou étant fonctionnellement relié à l'écrou (19, 719) et étant agencé pour empêcher une rotation de la couronne (13, 113, 213, 313, 413, 513, 613) lorsque le verrou (60, 160, 260, 360, 460, 560, 660) est dans sa première position,
les moyens de conversion de mouvement (31, 41, 44, 48, 68, 70, 76, 78, 80.1, 80.2, 83, 84, 85, 87, 88, 89, 90, 91, 93, 95, 131, 141, 144, 148, 231, 241, 244, 248, 331, 341, 344, 431, 441, 444, 531, 541, 544, 631, 645, 668) comprenant une tige (31 , 131, 231, 331, 431, 531, 631) montée à coulissement dans un logement central (30, 130, 230, 330, 430, 530, 630) de la vis (15, 115, 215, 315, 415, 515, 615) s'étendant selon l'axe longitudinal (Oy), la tige (31, 131, 231, 331, 431, 531, 631) étant fonctionnellement reliée à l'élément à déplacer (2, 102, 202, 302, 402, 502, 602) de manière à passer d'une première position rétractée de la tige (31, 131, 231, 331, 431, 531, 631) à une deuxième position déployée de la tige (31, 131, 231, 331, 431, 531, 631) lorsque l'élément à déplacer (2, 102, 202, 302, 402, 502, 602) est amené au-delà de sa position rétractée,
les moyens de conversion de mouvement (31, 41, 44, 48, 68, 70, 76, 78, 80.1, 80.2, 83, 84, 85, 87, 88, 89, 90, 91, 93, 95, 131, 141, 144, 148, 231, 241, 244, 248, 331, 341, 344, 431, 441, 444) comprenant également un levier (41, 141, 241, 341, 441) monté à rotation sur le bâti, le levier (41, 141, 241, 341, 441) ayant une première extrémité (42, 142, 242, 342, 442) agencée pour être actionnée par la tige (31, 131, 231, 331, 431) lorsqu'elle passe en sa deuxième position déployée,
la deuxième extrémité (43, 143, 243, 343, 443) du levier (41, 141, 241, 341, 441) étant agencée pour déplacer une deuxième douille (44, 144, 244, 344, 444) montée à coulissement sur un premier arbre (45, 145, 245, 345, 445) solidaire en rotation du verrou (60, 160, 260, 360, 460).

4. Actionneur électromécanique (1, 101, 201, 301, 401, 501, 601) selon la revendication 2, dans lequel l'arbre de sortie (11) du moteur (10) est pourvu d'un pignon (12) engrenant avec une couronne (13, 113, 213, 313, 413, 513, 613) dentée intérieurement, et la vis (15, 115, 215, 315, 415, 515, 615) est solidaire en rotation de la couronne (13, 113, 213, 313, 413, 513, 613),
le dispositif passif de verrouillage (40, 140, 240, 340, 440, 540, 640) comprenant une butée (13.1, 13.2, 113.1, 113.2, 213.1, 213.2, 313.1, 313.2, 413.1, 413.2, 513.1, 513.2, 613.1, 613.2) portée par la couronne (13, 113, 213, 313, 413, 513, 613) et qui est destinée à coopérer avec le verrou (60, 160, 260, 360, 460, 560, 660), le verrou étant fonctionnellement relié à l'écrou (19, 719) et étant agencé pour empêcher une rotation de la couronne (13, 113, 213, 313, 413, 513, 613) lorsque le verrou (60, 160, 260, 360, 460, 560, 660) est dans sa première position,
les moyens de conversion de mouvement (31, 41, 44, 48, 68, 70, 76, 78, 80.1, 80.2, 83, 84, 85, 87, 88, 89, 90, 91, 93, 95, 131, 141, 144, 148, 231, 241, 244, 248, 331, 341, 344, 431, 441, 444, 531, 541, 544, 631, 645, 668) comprenant une tige (31 , 131, 231, 331, 431, 531, 631) montée à coulissement dans un logement central (30, 130, 230, 330, 430, 530, 630) de la vis (15, 115, 215, 315, 415, 515, 615) s'étendant selon l'axe longitudinal (Oy), la tige (31, 131, 231, 331, 431, 531, 631) étant fonctionnellement reliée à l'élément à déplacer (2, 102, 202, 302, 402, 502, 602) de manière à passer d'une première position rétractée de la tige (31, 131, 231, 331, 431, 531, 631) à une deuxième position déployée de la tige (31, 131, 231, 331, 431, 531, 631) lorsque l'élément à déplacer (2, 102, 202, 302, 402, 502, 602) est amené au-delà de sa position rétractée,
les moyens de conversion de mouvement (84, 85, 87, 88, 89, 90, 91, 93, 95, 531, 541, 544, 631, 645, 668) étant agencés pour convertir un mouvement de l'élément à déplacer (502, 602) au-delà de sa position rétractée en une rotation de la tige (531, 631).

5. Actionneur électromécanique (401) selon la revendication 3, dans lequel les moyens de conversion de mouvement (70, 76, 78, 80.1, 80.2, 83, 431, 441, 444) comprennent également un plongeur (70) monté à rotation sur le premier arbre (445) et dont une première extrémité (70.1) du plongeur (70) coopère avec une première extrémité (76.1) d'un corps de came (76) lié au premier arbre (445) par une liaison de type glissière, la face extérieure (79) du plongeur (70) comprenant au moins une rainure (79.1, 79.2) coopérant avec un arrêt (80.1, 80.2) solidaire de la deuxième douille (444), les moyens de conversion de mouvement (70, 76, 78, 80.1, 80.2, 83, 431, 441, 444) comprenant également des premiers moyens de rappel (83) en position de la deuxième douille (444), ainsi que des moyens de poussée (78) du corps de came (76) agencés pour amener la première extrémité (76.1) du corps de came (76) contre la première extrémité (70.1) du plongeur (70).

6. Actionneur électromécanique (1, 101, 201, 301, 401, 501, 601) selon l'un quelconque des revendications 3 à 5 , dans lequel le premier arbre (45, 145, 245, 345) comprend une rainure (48, 148, 248, 348) s'étendant hélicoïdalement sur le premier arbre (45, 145, 245, 345), la deuxième douille (44, 144, 244, 344) étant solidaire d'une première bague (49, 149, 249, 349) cylindrique pourvue d'un suiveur (50) coopérant avec la rainure (48, 148, 248, 348) et un cliquet (52) agencés de manière à ce que :
- un déplacement de la deuxième douille (44, 144, 244, 344) sur le premier arbre (45, 145, 245, 345) dans un premier sens (I) de déplacement provoque une rotation du premier arbre (45, 145, 245, 345) relativement à la deuxième douille (44, 144, 244, 344), et
- un déplacement de la deuxième douille (44, 144, 244, 344) sur le premier arbre (45, 145, 245, 345) dans un deuxième sens (II) de déplacement opposé au premier ne provoque aucune rotation du premier arbre (45, 145, 245, 345) relativement à la deuxième douille (44, 144, 244, 344) .

7. Actionneur électromécanique (401) selon la revendication 4 ou 5, dans lequel la liaison de type glissière comprend une goupille (76.6) s'étendant au travers d'une lumière (77) longitudinale du premier arbre (445) .

8. Actionneur électromécanique (401) selon l'une des revendications 5 ou 6, dans lequel les premiers moyens de rappel de la deuxième douille et/ou les moyens de poussée du corps de came comprennent un ressort hélicoïdal (78, 83).

9. Actionneur électromécanique (101, 201, 301, 401) selon l'une quelconque des revendications 3 à 8, dans lequel le logement central (130, 230, 330, 430, 530, 630) s'étend sur toute la longueur de la vis (15, 115, 215, 315, 415, 515, 615), la tige (131, 231, 331, 431, 531, 631) ayant une première extrémité venant en saillie d'une première extrémité de la vis (115, 215, 315, 415, 515, 615) .

10. Actionneur électromécanique (1) selon l'une quelconque des revendications 3 à 8, dans lequel le logement central est borgne, et dans lequel la tige (31) comprend une première portion s'étendant dans un alésage (34) traversant la vis (15) selon une direction sensiblement orthogonale à l'axe longitudinal, la première portion de la tige (31) étant reliée à une première douille (36) montée à coulissement sur la vis (15) selon l'axe longitudinal (Oy).

11. Actionneur électromécanique (1, 101, 201, 301, 401) selon l'une quelconque des revendications 3 à 10, comprenant des moyens de rappel (36, 64) de la tige (31, 131, 231, 331, 431) à sa première position rétractée.

12. Actionneur électromécanique (1) selon la revendication 3 ou 4, comprenant des premiers moyens de rappel (47) en position de la deuxième douille (44).

13. Actionneur électromécanique (1, 101, 201, 301) selon la revendication 6, dans lequel le suiveur (50) et la rainure (48) sont agencés de manière à ce que le déplacement de la deuxième douille (44, 144, 244, 344) sur le premier arbre (45, 145, 245, 345) dans le premier sens (I) de coulissement provoque une rotation du premier arbre (45, 145, 245, 345) de 90° relativement à la deuxième douille (44, 144, 244, 344).

14. Actionneur électromécanique (201) selon la revendication 6, dans lequel le suiveur (50) et la rainure (48) sont agencées de manière à provoquer sélectivement un passage du verrou (260) depuis l'une des première et deuxième positions à l'autre des première et deuxième positions lorsque le premier arbre (245) effectue une rotation de 180 degrés.

15. Actionneur électromécanique (501, 601) selon la revendication 4, dans lequel la tige (531, 631) est fonctionnellement liée en rotation à un pignon (91) d'un engrenage (93) d'entrainement d'une roue menante (94) comprenant au moins un doigt (94.1, 94.2) destiné à coopérer avec une rainure (95.1, 95.2, 95.3, 95.4) d'une roue menée (95) de type Croix de Malte, la roue menée (95) étant solidaire en rotation du verrou (560, 660).

16. Actionneur électromécanique (501, 601) selon la revendication 15, dans lequel la roue menée (95) comprend quatre rainures (95.1, 95.2, 95.3, 95.4) et la roue menante (94) comprend deux doigts (94.1, 94.2).

17. Actionneur électromécanique (501, 601) selon la revendication 15 ou 16, dans lequel la portion (96.1, 96.2, 96.3, 96.4) de roue menée (95) séparant deux rainures (95.1, 95.2, 95.3, 95.4) successives dessine un arrondi concave destiné à coopérer avec une portion homologue (94.3, 94.4) de la roue menante (94) lors de sa rotation.

18. Actionneur électromécanique (201, 301, 601) selon l'une quelconque des revendications 3 à 17, dans lequel le verrou (260, 360, 660) comprend une roue à came (68, 668) solidaire du premier arbre (245, 345, 645) et agissant sur la première extrémité (69.1, 669.1) d'un linguet (69, 669) monté à rotation sur le bâti (208, 308, 608) et dont la deuxième extrémité (69.2, 669.2) coopère sélectivement avec la butée (213.1, 213.2, 313.1, 313.2, 613.1, 613.2).

19. Actionneur électromécanique (1) selon la revendication 3 à 17, dans lequel le verrou (60) est solidaire en rotation du premier arbre (45) et comprend au moins une portion convexe (61.1, 61.2) destinée à collaborer avec la butée (13) lorsque le verrou (60) est en première position et une portion concave (62.1, 62.2) agencée pour laisser libre la rotation de la couronne (13) lorsque le verrou (60) est en deuxième position.

20. Actionneur électromécanique (1, 101, 201, 301, 401, 501, 601) selon la revendication 19, dans lequel la portion convexe (61.1, 61.2) est une portion de disque dont le centre est situé sur l'axe de rotation (O₄₅) du premier arbre (45).

21. Actionneur électromécanique (501, 601) selon la revendication 3 ou 4, dans lequel les moyens de conversion de mouvement (84, 85, 87, 88, 89, 90, 91, 93, 95, 531, 541, 544, 631, 645, 668) sont agencés pour convertir un mouvement de l'élément à déplacer (502, 602) au-delà de sa position rétractée en une rotation de la tige (531, 631).

22. Actionneur électromécanique (501, 601) selon la revendication 21, dans lequel la tige (531, 631) est fonctionnellement liée en rotation à un pignon (91) d'un engrenage (93) d'entrainement d'une roue menante (94) comprenant au moins un doigt (94.1, 94.2) destiné à coopérer avec une rainure (95.1, 95.2, 95.3, 95.4) d'une roue menée (95) de type Croix de Malte, la roue menée (95) étant solidaire en rotation du verrou (560, 660).

23. Actionneur électromécanique (501, 601) selon la revendication 21, dans lequel la roue menée (95) comprend quatre rainures (95.1, 95.2, 95.3, 95.4) et la roue menante (94) comprend deux doigts (94.1, 94.2).

24. Actionneur électromécanique (501, 601) selon l'une des revendications 22 ou 23, dans lequel la portion (96.1, 96.2, 96.3, 96.4) de roue menée (95) séparant deux rainures (95.1, 95.2, 95.3, 95.4) successives dessine un arrondi concave destiné à coopérer avec une portion homologue (94.3, 94.4) de la roue menante (94) lors de sa rotation.

25. Actionneur électromécanique (201, 301, 601) selon l'une quelconque des revendications 3 à 24, dans lequel le verrou (260, 360, 660) comprend une roue à came (68, 668) solidaire du premier arbre (245, 345, 645) et agissant sur la première extrémité (69.1, 669.1) d'un linguet (69, 669) monté à rotation sur le bâti (208, 308, 608) et dont la deuxième extrémité (69.2, 669.2) coopère sélectivement avec la butée (213.1, 213.2, 313.1, 313.2, 613.1, 613.2).

26. Actionneur électromécanique (701) selon la revendication 2, dans lequel les moyens de conversion de mouvement (1031, 736, 742) comprennent un coulisseau (1031) monté à coulissement dans un logement central (30) de la vis (715) s'étendant selon l'axe longitudinal (Oy), le coulisseau (1031) étant fonctionnellement relié à l'élément à déplacer (702) de manière à passer d'une première position déployée du coulisseau (1031) à une deuxième position rétractée du coulisseau (1031) lorsque l'élément à déplacer (702) est amené au-delà de sa position rétractée.

27. Actionneur électromécanique (701) selon la revendication 26, dans lequel le coulisseau (1031) comprend une première portion (1033) s'étendant dans un alésage (1034) traversant la vis (715) selon une direction sensiblement orthogonale à l'axe longitudinal, la première portion du coulisseau (1031) étant reliée à une première douille (736) montée à coulissement sur la vis (715) selon l'axe longitudinal (Oy).

28. Actionneur électromécanique (701) selon l'une des revendications 26 ou 27, comprenant des moyens de rappel (1042) du coulisseau (1031) vers sa première position déployée agencés pour maintenir le coulisseau (1031) en sa deuxième position rétractée pendant une durée prédéterminée avant de rappeler le coulisseau (1031) vers sa première position déployée.

29. Actionneur électromécanique (701) selon l'une quelconque des revendications 26 à 28, dans lequel le coulisseau (1031) comprend au moins une portion (1037) tronconique.

30. Actionneur électromécanique (701) selon l'une quelconque des revendications 26 à 28, dans lequel le verrou (760) comprend au moins une bille (1051, 1052).

31. Actionneur électromécanique (701) selon l'une quelconque des revendications 26 à 29, dans lequel le verrou (760) est agencé pour solidariser en rotation l'écrou (719) à la vis (715) lorsqu'il est dans sa première position.

32. Actionneur électromécanique (1) selon l'une quelconque des revendications précédentes, comprenant des moyens de détection (63) de la position du verrou (60).

33. Actionneur électromécanique (1, 101, 201, 301, 401, 501, 601) selon la revendication 1, dans lequel les moyens d'actionnement comprennent des moyens de conversion de mouvement (31, 41, 44, 48, 68, 70, 76, 78, 80.1, 80.2, 83, 84, 85, 87, 88, 89, 90, 91, 93, 95, 131, 141, 144, 148, 231, 241, 244, 248, 331, 341, 344, 431, 441, 444, 531, 541, 544, 631, 645, 668) agencés pour convertir un mouvement de l'élément à déplacer (2, 102, 202, 302, 402, 502, 602, 702) au-delà de sa première position rétractée en un mouvement de translation apte à faire passer le verrou (60, 160, 260, 360, 460, 560, 660, 760) depuis une des première et deuxième positions à l'autre des première et deuxième positions.

34. Actionneur électromécanique (1) selon la revendication 33, dans lequel les moyens de conversion de mouvement (31, 36, 42) comprennent un coulisseau (31) monté à coulissement dans un logement central (30) de la vis (15) s'étendant selon l'axe longitudinal (Oy), le coulisseau (31) étant fonctionnellement relié à l'élément à déplacer (2) de manière à passer d'une première position déployée du coulisseau (31) à une deuxième position rétractée du coulisseau (31) lorsque l'élément à déplacer (2) est amené au-delà de sa position rétractée.

35. Actionneur électromécanique (1) selon la revendication 34, dans lequel le coulisseau (31) comprend une première portion (33) s'étendant dans un alésage (34) traversant la vis (15) selon une direction sensiblement orthogonale à l'axe longitudinal, la première portion du coulisseau (31) étant reliée à une première douille (36) montée à coulissement sur la vis (15) selon l'axe longitudinal (Oy).

36. Actionneur électromécanique (1) selon l'une des revendications 34 ou 35, comprenant des moyens de rappel (42) du coulisseau (31) vers sa première position déployée agencés pour maintenir le coulisseau en sa deuxième position rétractée pendant une durée prédéterminée avant de rappeler le coulisseau (31) vers sa première position déployée.

37. Actionneur électromécanique (1) selon l'une quelconque des revendications 34 à 36, dans lequel le coulisseau (31) comprend au moins une portion (37) tronconique.

38. Actionneur électromécanique (1) selon l'une quelconque des revendications 34 à 37, dans lequel le verrou (60) comprend au moins une bille (51, 52).

39. Actionneur électromécanique (1) selon l'une quelconque des revendications précédentes, dans lequel le verrou (60) est agencé pour solidariser en rotation l'écrou (19) à la vis (15) lorsqu'il est dans sa première position.

## Patentansprüche

1. Verriegelbarer elektromechanischer Aktor (1, 101, 201, 301, 401, 501, 601, 701), umfassend:
- ein Gestell (8, 108, 208, 308, 408, 508, 608);
- einen Motor (10), dessen Abtriebswelle (11) drehfest mit einer Schraube (15, 115, 215, 315, 415, 515, 615, 715) verbunden ist, die sich entlang einer Längsachse (Oy) erstreckt;
- eine Mutter (19, 719), die auf der Schraube (15, 115, 215, 315, 415, 515, 615, 715) in Eingriff steht und mit Verbindungsmitteln (24) zu Verbindung mit einem zu bewegenden Element (2, 102, 202, 302, 402, 502, 602, 702) versehen ist, wobei sich die Mutter (19) auf der Schraube (15, 115, 215, 315, 415, 515, 615, 715) von einer eingefahrenen ersten Position der Mutter (19, 719) zu einer ausgefahrenen zweiten Position der Mutter (19, 719) bewegt, die einer eingefahrenen ersten Position des zu bewegenden Elements (2, 102, 202, 302, 402, 502, 602, 702) bzw. einer ausgefahrenen zweiten Position des zu bewegenden Elements (2, 102, 202, 302, 402, 502, 602, 702) entspricht;
- eine Verriegelungsvorrichtung (40, 140, 240, 340, 440, 540, 640, 1050) zur Verriegelung des zu bewegenden Elements (2, 102, 202, 302, 402, 502, 602, 702) in der eingefahrenen Position;
wobei die Verriegelungsvorrichtung (40, 140, 240, 340, 440, 540, 640, 1050) Betätigungsmittel zum Betätigen eines Riegels (60, 160, 260, 360, 460, 560, 660, 760) umfasst, der selektiv eine erste Position, in der der Riegel (60, 160, 260, 360, 460, 560, 660, 760) eine relative Drehung der Schraube (15, 115, 215, 315, 415, 515, 615, 715) und der Mutter (19, 719) verhindert, die zu einem Ausfahren des zu bewegenden Elements (2, 102, 202, 302, 402, 502, 602, 702) führen würde, und eine zweite Po-sition einnehmen kann, in der die relative Drehung der Schraube (15, 115, 215, 315, 415, 515, 615, 715) und der Mutter (19, 719) frei ist, **dadurch gekennzeichnet, dass** die Verriegelungsvorrichtung (40, 140, 240, 340, 440, 540, 640, 1050) eine passive Vorrichtung ist und ausgebildet ist, damit:
- wenn der Riegel (60, 160, 260, 360, 460, 560, 660, 760) in seiner ersten Position ist, der Riegel (60, 160, 260, 360, 460, 560, 660, 760) von seiner ersten Position in die zweite Position übergeht, wenn das zu bewegende Element (2, 102, 202, 302, 402, 502, 602) über seine eingefahrene Position hinaus geführt wird,
- wenn der Riegel (60, 160, 260, 360, 460, 560, 660, 760) in seiner zweiten Position ist, der Riegel (60, 160, 260, 360, 460, 560, 660, 760) von der zweiten Position in die erste Position übergeht, wenn das zu bewegende Element (2, 102, 202, 302, 402, 502, 602) über seine eingefahrene Position hinaus geführt wird.

2. Elektromechanischer Aktor (1, 101, 201, 301, 401, 501, 601) nach Anspruch 1, bei dem die Betätigungsmittel Bewegungsumwandlungsmittel (31, 41, 44, 48, 68, 70, 76, 78, 80.1, 80.2, 83, 84, 85, 87, 88, 89, 90, 91, 93, 95, 131, 141, 144, 148, 231, 241, 244, 248, 331, 341, 344, 431, 441, 444, 531, 541, 544, 631, 645, 668) umfassen, die ausgebildet sind, um eine Bewegung des zu bewegenden Elements (2, 102, 202, 302, 402, 502, 602, 702) über seine eingefahrene erste Position hinaus in eine Drehbewegung umzuwandeln, die geeignet ist, den Riegel (60, 160, 260, 360, 460, 560, 660, 760) von einer Position aus der ersten und zweiten Position in die andere Position aus der ersten und zweiten Position zu bewegen.

3. Elektromechanischer Aktor (1, 101, 201, 301, 401, 501, 601) nach Anspruch 2, bei dem die Abtriebswelle (11) des Motors (10) mit einem Ritzel (12) versehen ist, das mit einem Kranz (13, 113, 213, 313, 413, 513, 613) mit Innenverzahnung in Eingriff steht, und die Schraube (15, 115, 215, 315, 415, 515, 615) drehfest mit dem Kranz (13, 113, 213, 313 413, 513 613) verbunden ist,
wobei die passive Verriegelungsvorrichtung (40, 140, 240, 340, 440, 540, 640) einen Anschlag (13.1, 13.2, 113.1, 113.2, 213.1, 213.2, 313.1, 313.2, 413.1, 413.2, 513.1, 513.2, 613.1, 613.2) umfasst, der von dem Kranz (13, 113, 213, 313, 413, 513, 613) getragen wird und der dazu bestimmt ist, mit dem Riegel (60, 160, 260, 360, 460, 560, 660) zusammenzuwirken, wobei der Riegel funktional mit der Mutter (19, 719) verbunden und ausgebildet ist, um eine Drehung des Kranzes (13, 113, 213, 313, 413, 513, 613) zu verhindern, wenn der Riegel (60, 160, 260, 360, 460, 560, 660) in seiner ersten Position ist,
wobei die Bewegungsumwandlungsmittel (31, 41, 44, 48, 68, 70, 76, 78, 80.1, 80.2, 83, 84, 85, 87, 88, 89, 90, 91, 93, 95, 131, 141, 144, 148, 231, 241, 244, 248, 331, 341, 344, 431, 441, 444, 531, 541, 544, 631, 645, 668) eine Stange (31, 131, 231, 331, 431, 531, 631) umfassen, die verschiebbar in einer zentralen Aufnahme (30, 130, 230, 330, 430, 530, 630) der Schraube (15, 115, 215, 315, 415, 515, 615) gelagert ist, die sich entlang der Längsachse (Oy) erstreckt, wobei die Stange (31, 131, 231, 331, 431, 531, 631) funktional mit dem zu bewegenden Element (2, 102, 202, 302, 402, 502, 602) derart verbunden ist, dass sie von einer eingefahrenen ersten Position der Stange (31, 131, 231, 331, 431, 531, 631) in eine ausgefahrene zweite Position der Stange (31, 131, 231, 331, 431, 531, 631) übergeht, wenn das zu bewegende Element (2, 102, 202, 302, 402, 502, 602) über seine eingefahrene Position hinaus geführt wird,
wobei die Bewegungsumwandlungsmittel (31, 41, 44, 48, 68, 70, 76, 78, 80.1, 80.2, 83, 84, 85, 87, 88, 89, 90, 91, 93, 95, 131, 141, 144, 148, 231, 241, 244, 248, 331, 341, 344, 431, 441, 444) ferner einen Hebel (41, 141, 241, 341, 441) umfassen, der drehbar an dem Gestell gelagert ist, wobei der Hebel (41, 141, 241, 341, 441) ein erstes Ende (42, 142, 242, 342, 442) hat, das ausgebildet ist, um von der Stange (31, 131, 231, 331, 431) betätigt zu werden, wenn sie in ihre ausgefahrene zweite Position übergeht,
wobei das zweite Ende (43, 143, 243, 343, 443) des Hebels (41, 141, 241, 341, 441) ausgebildet ist, um eine zweite Hülse (44, 144, 244, 344, 444) zu bewegen, die verschiebbar auf einer ersten Welle (45, 145, 245, 345, 445) gelagert ist, die drehfest mit dem Riegel (60, 160, 260, 360, 460) verbunden ist.

4. Elektromechanischer Aktor (1, 101, 201, 301, 401, 501, 601) nach Anspruch 2, bei dem die Abtriebswelle (11) des Motors (10) mit einem Ritzel (12) versehen ist, das mit einem Kranz (13, 113, 213, 313, 413, 513, 613) mit Innenverzahnung in Eingriff steht, und die Schraube (15, 115, 215, 315, 415, 515, 615) drehfest mit dem Kranz (13, 113, 213, 313, 413, 513, 613) verbunden ist,
wobei die passive Verriegelungsvorrichtung (40, 140, 240, 340, 440, 540, 640) einen Anschlag (13.1, 13.2, 113.1, 113.2, 213.1, 213.2, 313.1, 313.2, 413.1, 413.2, 513.1, 513.2, 613.1, 613.2) umfasst, der von dem Kranz (13, 113, 213, 313, 413, 513, 613) getragen wird und der dazu bestimmt ist, mit dem Riegel (60, 160, 260, 360, 460, 560, 660) zusammenzuwirken, wobei der Riegel funktional mit der Mutter (19, 719) verbunden und ausgebildet ist, um eine Drehung des Kranzes (13, 113, 213, 313, 413, 513, 613) zu verhindern, wenn der Riegel (60, 160, 260, 360, 460, 560, 660) in seiner ersten Position ist,
wobei die Bewegungsumwandlungsmittel (31, 41, 44, 48, 68, 70, 76, 78, 80.1, 80.2, 83, 84, 85, 87, 88, 89, 90, 91, 93, 95, 131, 141, 144, 148, 231, 241, 244, 248, 331, 341, 344, 431, 441, 444, 531, 541, 544, 631, 645, 668) eine Stange (31, 131, 231, 331, 431, 531, 631) umfassen, die verschiebbar in einer zentralen Aufnahme (30, 130, 230, 330, 430, 530, 630) der Schraube (15, 115, 215, 315, 415, 515, 615) gelagert ist, die sich entlang der Längsachse (Oy) erstreckt, wobei die Stange (31, 131, 231, 331, 431, 531, 631) funktional mit dem zu bewegenden Element (2, 102, 202, 302, 402, 502, 602) derart verbunden ist, dass sie von einer eingefahrenen ersten Position der Stange (31, 131, 231, 331, 431, 531, 631) in eine ausgefahrene zweite Position der Stange (31, 131, 231, 331, 431, 531, 631) übergeht, wenn das zu bewegende Element (2, 102, 202, 302, 402, 502, 602) über seine eingefahrene Position hinaus geführt wird, wobei die Bewegungsumwandlungsmittel (84, 85, 87, 88, 89, 90, 91, 93, 95, 531, 541, 544, 631, 645, 668) ausgebildet sind, um eine Bewegung des zu bewegenden Elements (502, 602) über seine eingefahrene Position hinaus in eine Drehung der Stange (531, 631) umzuwandeln.

5. Elektromechanischer Aktor (401) nach Anspruch 3, bei dem die Bewegungsumwandlungsmittel (70, 76, 78, 80.1, 80.2, 83, 431, 441, 444) ferner einen Tauchkolben (70) umfassen, der drehbar auf der ersten Welle (445) gelagert ist und von dem ein erstes Ende (70.1) des Tauchkolbens (70) mit einem ersten Ende (76.1) eines Nockenkörpers (76) zusammenwirkt, der mit der ersten Welle (445) über eine Verbindung der Art Gleitschienenverbindung verbunden ist, wobei die Außenfläche (79) des Tauchkolbens (70) mindestens eine Nut (79.1, 79.2) umfasst, die mit einem Anschlag (80.1, 80.2) zusammenwirkt, der fest mit der zweiten Hülse (444) verbunden ist, wobei die Bewegungsumwandlungsmittel (70, 76, 78, 80.1, 80.2, 83, 431, 441, 444) ferner erste Rückstellmittel (83) zum Rückstellen der zweiten Hülse (444) in ihre Position umfassen, sowie Schubmittel (78) zum Vorschieben des Nockenkörpers (76), die ausgebildet sind, um das erste Ende (76.1) des Nockenkörpers (76) gegen das erste Ende (70.1) des Tauchkolbens (70) zu bringen.

6. Elektromechanischer Aktor (1, 101, 201, 301, 401, 501, 601) nach einem der Ansprüche 3 bis 5, bei dem die erste Welle (45, 145, 245, 345) eine Nut (48, 148, 248, 348) umfasst, die sich schraubenförmig auf der ersten Welle (45, 145, 245, 345) erstreckt, wobei die zweite Hülse (44, 144, 244, 344) fest mit einem zylindrischen ersten Ring (49, 149, 249, 349) verbunden ist, der mit einem Mitnehmer (50) versehen ist, der mit der Nut (48, 148, 248, 348) und einer Sperrklinke (52) zusammenwirkt, die derart ausgebildet sind, dass:
- eine Bewegung der zweiten Hülse (44, 144, 244, 344) auf der ersten Welle (45, 145, 245, 345) in eine erste Bewegungsrichtung (I) eine Drehung der ersten Welle (45, 145, 245, 345) relativ zur zweiten Hülse (44, 144, 244, 344) verursacht, und
- eine Bewegung der zweiten Hülse (44, 144, 244, 344) auf der ersten Welle (45, 145, 245, 345) in eine zur ersten entgegengesetzte zweite Bewegungsrichtung (II) keine Drehung der ersten Welle (45, 145, 245, 345) relativ zur zweiten Hülse (44, 144, 244, 344) verursacht.

7. Elektromechanischer Aktor (401) nach Anspruch 4 oder 5, bei dem die Verbindung vom Typ Gleitschienenverbindung einen Stift (76.6) umfasst, der sich durch ein Langloch (77) der ersten Welle (445) erstreckt.

8. Elektromechanischer Aktor (401) nach einem der Ansprüche 5 oder 6, bei dem die ersten Rückstellmittel zum Rückstellen der zweiten Hülse und/oder die Schubmittel zum Verschieben des Nockenkörpers eine Schraubenfeder (78, 83) umfassen.

9. Elektromechanischer Aktor (101, 201, 301, 401) nach einem der Ansprüche 3 bis 8, bei dem sich die zentrale Aufnahme (130, 230, 330, 430, 530, 630) über die gesamte Länge der Schraube (15, 115, 215, 315, 415, 515, 615) erstreckt, wobei die Stange (131, 231, 331, 431, 531, 631) ein erstes Ende hat, das von einem ersten Ende der Schraube (115, 215, 315, 415, 515, 615) vorstehen wird.

10. Elektromechanischer Aktor (1) nach einem der Ansprüche 3 bis 8, bei dem die zentrale Aufnahme eine Blindaufnahme ist und bei dem die Stange (31) einen ersten Abschnitt umfasst, der sich in einer Bohrung (34) erstreckt, die die Schraube (15) in einer Richtung durchsetzt, die im Wesentlichen orthogonal zur Längsachse ist, wobei der erste Abschnitt der Stange (31) mit einer ersten Hülse (36) verbunden ist, die auf der Schraube (15) entlang der Längsachse (Oy) verschiebbar gelagert ist.

11. Elektromechanischer Aktor (1, 101, 201, 301, 401) nach einem der Ansprüche 3 bis 10, umfassend Rückstellmittel (36, 64) zum Rückstellen der Stange (31, 131, 231, 331, 431) in ihre eingefahrene erste Position.

12. Elektromechanischer Aktor (1) nach Anspruch 3 oder 4, umfassend erste Rückstellmittel (47) zum Rückstellen der zweiten Hülse (44) in ihre Position.

13. Elektromechanischer Aktor (1, 101, 201, 301) nach Anspruch 6, bei dem der Mitnehmer (50) und die Nut (48) derart ausgebildet sind, dass die Bewegung der zweiten Hülse (44, 144, 244, 344) auf der ersten Welle (45, 145, 245, 345) in die erste Bewegungsrichtung (I) eine Drehung der ersten Welle um 90° relativ zur zweiten Hülse (44, 144, 244, 344) verursacht.

14. Elektromechanischer Aktor (201) nach Anspruch 6, bei dem der Mitnehmer (50) und die Nut (48) derart ausgebildet sind, dass sie selektiv einen Übergang des Riegels (260) von einer der ersten und zweiten Positionen in die andere der ersten und zweiten Positionen verursachen, wenn die erste Welle (245) eine Drehung um 180 Grad verursacht.

15. Elektromechanischer Aktor (501, 601) nach Anspruch 4, bei dem die Stange (531, 631) funktional drehfest mit einem Ritzel (91) eines Antriebsgetriebes (93) zum Antrieb eines treibenden Rades (94) verbunden ist, das mindestens einen Finger (94.1, 94.2) umfasst, der dazu bestimmt ist, mit einer Nut (95.1, 95.2, 95.3, 95.4) eines angetriebenen Rades (95) vom Typ Malteserkreuz zusammenzuwirken, wobei das angetriebene Rad (95) drehfest mit dem Riegel (560, 660) verbunden ist.

16. Elektromechanischer Aktor (501, 601) nach Anspruch 15, bei dem das angetriebene Rad (95) vier Nuten (95.1, 95.2, 95.3, 95.4) und das treibende Rad (94) zwei Finger (94.1, 94.2) umfasst.

17. Elektromechanischer Aktor (501, 601) nach Anspruch 15 oder 16, bei dem der Abschnitt (96.1, 96.2, 96.3, 96.4) des getriebenen Rades (95), der zwei aufeinanderfolgende Nuten (95.1, 95.2, 95.3, 95.4) trennt, eine konkave Rundung zeichnet, die dazu bestimmt ist, mit einem homologen Abschnitt (94.3, 94.4) des treibenden Rades (94) während dessen Drehung zusammenzuwirken.

18. Elektromechanischer Aktor (201, 301, 601) nach einem der Ansprüche 3 bis 17, bei dem der Riegel (260, 360, 660) ein Nockenrad (68, 668) umfasst, das fest mit der ersten Welle (245, 345, 645) verbunden ist und auf das erste Ende (69.1, 669.1) eines Sperrhebels (69, 669) einwirkt, der drehbar an dem Gestell (208, 308, 608) gelagert ist und dessen zweites Ende (69.2, 669.2) selektiv mit dem Anschlag (213.1, 213.2, 313.1, 313.2, 613.1, 613.2) zusammenwirkt.

19. Elektromechanischer Aktor (1) nach Anspruch 3 bis 17, bei dem der Riegel (60) drehfest mit der ersten Welle (45) verbunden ist und mindestens einen konvexen Abschnitt (61.1, 61.2) umfasst, der dazu bestimmt ist, mit dem Anschlag (13) zusammenzuwirken, wenn der Riegel (60) in der ersten Position ist, sowie einen konkaven Abschnitt (62.1, 62.2), der so ausgebildet ist, dass sich der Kranz (13) frei drehen kann, wenn der Riegel (60) in der zweiten Position ist.

20. Elektromechanischer Aktor (1, 101, 201, 301, 401, 501, 601) nach Anspruch 19, bei dem der konvexe Abschnitt (61.1, 61.2) ein Scheibenabschnitt ist, dessen Mitte sich auf der Rotationachse (O₄₅) der ersten Welle (45) befindet.

21. Elektromechanischer Aktor (501, 601) nach Anspruch 3 oder 4, bei dem die Bewegungsumwandlungsmittel (84, 85, 87, 88, 89, 90, 91, 93, 95, 531, 541, 544, 631, 645, 668) ausgebildet sind, um eine Bewegung des zu bewegenden Elements (502, 602) über seine eingefahrene Position hinaus in eine Drehung der Stange (531, 631) umzuwandeln.

22. Elektromechanischer Aktor (501, 601) nach Anspruch 21, bei dem die Stange (531, 631) funktional drehfest mit einem Ritzel (91) eines Antriebsgetriebes (93) zum Antrieb eines treibenden Rades (94) verbunden ist, das mindestens einen Finger (94.1, 94.2) umfasst, der dazu bestimmt ist, mit einer Nut (95.1, 95.2, 95.3, 95.4) eines angetriebenen Rades (95) vom Typ Malteserkreuz zusammenzuwirken, wobei das angetriebene Rad (95) drehfest mit dem Riegel (560, 660) verbunden ist.

23. Elektromechanischer Aktor (501, 601) nach Anspruch 21, bei dem das angetriebene Rad (95) vier Nuten (95.1, 95.2, 95.3, 95.4) umfasst und das treibende Rad (94) zwei Finger (94.1, 94.2) umfasst.

24. Elektromechanischer Aktor (501, 601) nach einem der Ansprüche 22 oder 23, bei dem der Abschnitt (96.1, 96.2, 96.3, 96.4) des angetriebenen Rades (95), der zwei aufeinanderfolgende Nuten (95.1, 95.2, 95.3, 95.4) trennt, eine konkave Rundung zeichnet, die dazu bestimmt ist, mit einem homologen Abschnitt (94.3, 94.4) des treibenden Rades (94) während dessen Drehung zusammenzuwirken.

25. Elektromechanischer Aktor (201, 301, 601) nach einem der Ansprüche 3 bis 24, bei dem der Riegel (260, 360, 660) ein Nockenrad (68, 668) umfasst, das fest mit der ersten Welle (245, 345, 645) verbunden ist und auf das erste Ende (69.1, 669.1) eines Sperrhebels (69, 669) einwirkt, der drehbar an dem Gestell (208, 308, 608) gelagert ist und dessen zweites Ende (69.2, 669.2) selektiv mit dem Anschlag (213.1., 213.2, 313.1, 313.2, 613.1, 613.2) zusammenwirkt.

26. Elektromechanischer Aktor (701) nach Anspruch 2, bei dem die Bewegungsumwandlungsmittel (1031, 736, 742) einen Schieber (1031) umfassen, der verschiebbar in einer zentralen Aufnahme (30) der Schraube (715) gelagert ist, die sich entlang der Längsachse (Oy) erstreckt, wobei der Schieber (1031) derart funktional mit dem zu bewegenden Element (702) verbunden ist, dass er von einer ausgefahrenen ersten Position des Schiebers (1031) in eine eingefahrene zweite Position des Schiebers (1031) übergeht, wenn das zu bewegende Element (702) über seine eingefahrene Position hinaus geführt wird.

27. Elektromechanischer Aktor (701) nach Anspruch 26, bei dem der Schieber (1031) einen ersten Abschnitt (1033) umfasst, der sich in einer Bohrung (1034) erstreckt, die die Schraube (715) in einer Richtung durchsetzt, die im Wesentlichen orthogonal zur Längsachse ist, wobei der erste Abschnitt des Schiebers (1031) mit einer ersten Hülse (736) verbunden ist, die auf der Schraube (715) entlang der Längsachse (Oy) verschiebbar gelagert ist.

28. Elektromechanischer Aktor (701) nach einem der Ansprüche 26 oder 27, umfassend Rückstellmittel (1042) zum Rückstellen des Schiebers (1031) in seine ausgefahrene erste Position, die ausgebildet sind, um den Schieber (1031) in seiner eingefahrenen zweiten Position für eine vorbestimmte Dauer zu halten, ehe der Schieber (1031) in seine ausgefahrene erste Position rückgestellt wird.

29. Elektromechanischer Aktor (701) nach einem der Ansprüche 26 bis 28, bei dem der Schieber (1031) mindestens einen kegelstumpfförmigen Abschnitt (1037) umfasst.

30. Elektromechanischer Aktor (701) nach einem der Ansprüche 26 bis 28, bei dem der Riegel (760) mindestens eine Kugel (1051, 1052) umfasst.

31. Elektromechanischer Aktor (701) nach einem der Ansprüche 26 bis 29, bei dem der Riegel (760) ausgebildet ist, um die Mutter (719) drehfest mit der Schraube (715) zu verbinden, wenn er in seiner ersten Position ist.

32. Elektromechanischer Aktor (1) nach einem der vorhergehenden Ansprüche, umfassend Detektionsmittel (63) zum Erfassen der Position des Riegels (60).

33. Elektromechanischer Aktor (1, 101, 201, 301, 401, 501, 601) nach Anspruch 1, bei dem die Betätigungsmittel Bewegungsumwandlungsmittel (31, 41, 44, 48, 68, 70, 76, 78, 80.1, 80.2, 83, 84, 85, 87, 88, 89, 90, 91, 93, 95, 131, 141, 144, 148, 231, 241, 244, 248, 331, 341, 344, 431, 441, 444, 531, 541, 544, 631, 645, 668) umfassen, die ausgebildet sind, um eine Bewegung des zu bewegenden Elements (2, 102, 202, 302, 402, 502, 602, 702) über seine eingefahrene erste Position hinaus in eine Translationsbewegung umzuwandeln, die geeignet ist, den Riegel (60, 160, 260, 360, 460, 560, 660, 760) von einer der ersten und zweiten Positionen in die andere der ersten und zweiten Positionen zu bewegen.

34. Elektromechanischer Aktor (1) nach Anspruch 33, bei dem die Bewegungsumwandlungsmittel (31, 36, 42) einen Schieber (31) umfassen, der in einer zentralen Aufnahme (30) der Schraube (15), die sich entlang der Längsachse (Oy) erstreckt, verschiebbar gelagert ist, wobei der Schieber (31) derart funktional mit dem zu bewegenden Element (2) verbunden ist, dass er von einer ausgefahrenen ersten Position des Schiebers (31) in eine eingefahrene zweite Position des Schiebers (31) übergeht, wenn das zu bewegende Element (2) über seine eingefahrene Position hinaus geführt wird.

35. Elektromechanischer Aktor (1) nach Anspruch 34, bei dem der Schieber (31) einen ersten Abschnitt (33) umfasst, der sich in einer Bohrung (34) erstreckt, die die Schraube (15) in einer Richtung durchsetzt, die im Wesentlichen orthogonal zur Längsachse ist, wobei der erste Abschnitt des Schiebers (31) mit einer ersten Hülse (36) verbunden ist, die auf der Schraube (15) entlang der Längsachse (Oy) verschiebbar gelagert ist.

36. Elektromechanischer Aktor (1) nach einem der Ansprüche 34 oder 35, umfassend Rückstellmittel (42) zum Rückstellen des Schiebers (31) in seine ausgefahrene erste Position, die ausgebildet sind, um den Schieber in seiner eingefahrenen zweiten Position für eine vorbestimmte Dauer zu halten, ehe der Schieber (31) in seine ausgefahrene erste Position rückgestellt wird.

37. Elektromechanischer Aktor (1) nach einem der Ansprüche 34 bis 36, bei dem der Schieber (31) mindestens einen kegelstumpfförmigen Abschnitt (37) umfasst.

38. Elektromechanischer Aktor (1) nach einem der Ansprüche 34 bis 37, bei dem der Riegel (60) mindestens eine Kugel (51, 52) umfasst.

39. Elektromechanischer Aktor (1) nach einem der vorhergehenden Ansprüche, bei dem der Riegel (60) ausgebildet ist, um die Mutter (19) drehfest mit der Schraube (15) zu verbinden, wenn er in seiner ersten Position ist.

## Claims

1. A lockable electromechanical actuator (1, 101, 201, 301, 401, 501, 601, 701) comprising:
- a body (8, 108, 208, 308, 408, 508, 608);
- a motor (10) having its outlet shaft (11) constrained to rotate with a screw (15, 115, 215, 315, 415, 515, 615, 715) extending along a longitudinal axis (Oy) ;
- a nut (19, 719) engaged on the screw (15, 115, 215, 315, 415, 515, 615, 715) and provided with connection means (24) for connection to an element (2, 102, 202, 302, 402, 502, 602, 702) that is to be moved, the nut (19) moving on the screw (15, 115, 215, 315, 415, 515, 615, 715) from a retracted first position of the nut (19, 719) to a deployed second position of the nut (19, 719) corresponding respectively to a retracted first position of the element (2, 102, 202, 302, 402, 502, 602, 702) that is to be moved and to a deployed second position of the element (2, 102, 202, 302, 402, 502, 602, 702) that is to be moved; and
- a locking device (40, 140, 240, 340, 440, 540, 640, 1050) for locking the element (2, 102, 202, 302, 402, 502, 602, 702) that is to be moved in the retracted position;
the locking device (40, 140, 240, 340, 440, 540, 640, 1050) comprising one of the means for actuating a lock (60, 160, 260, 360, 460, 560, 660, 760) being capable of selectively adopting a first position in which the lock (60, 160, 260, 360, 460, 560, 660, 760) prevents relative turning between the screw (15, 115, 215, 315, 415, 515, 615, 715) and the nut (19, 719) that would lead to the element (2, 102, 202, 302, 402, 502, 602, 702) that is to be moved being deployed and a second position in which relative rotation between the screw (15, 115, 215, 315, 415, 515, 615, 715) and the nut (19, 719) is free; **characterized in that** the locking device (40, 140, 240, 340, 440, 540, 640, 1050) is a passive device and is arranged so that:
- when the lock (60, 160, 260, 360, 460, 560, 660, 760) is in its first position, the lock (60, 160, 260, 360, 460, 560, 660, 760) passes from the first position to the second position when the element (2, 102, 202, 302, 402, 502, 602) that is to be moved is taken beyond its retracted position; and
- when the lock (60, 160, 260, 360, 460, 560, 660, 760) is in its second position, the lock (60, 160, 260, 360, 460, 560, 660, 760) passes from the second position to the first position when the element (2, 102, 202, 302, 402, 502, 602) that is to be moved is taken beyond its retracted position.

2. An electromechanical actuator (1, 101, 201, 301, 401, 501, 601) according to claim 1, wherein the actuator means comprise movement conversion means (31, 41, 44, 48, 68, 70, 76, 78, 80.1, 80.2, 83, 84, 85, 87, 88, 89, 90, 91, 93, 95, 131, 141, 144, 148, 231, 241, 244, 248, 331, 341, 344, 431, 441, 444, 531, 541, 544, 631, 645, 668) arranged to convert movement of the element (2, 102, 202, 302, 402, 502, 602, 702) that is to be moved beyond its retracted first position into a movement in rotation suitable for causing the lock (60, 160, 260, 360, 460, 560, 660, 760) to pass from one of its first and second positions to the other one of its first and second positions.

3. An electromechanical actuator (1, 101, 201, 301, 401, 501, 601) according to claim 2, wherein the outlet shaft (11) of the motor (10) is provided with a pinion (12) meshing with a ring (13, 113, 213, 313, 413, 513, 613) having internal teeth, and the screw (15, 115, 215, 315, 415, 515, 615) is constrained to turn with the ring (13, 113, 213, 313, 413, 513, 613);
- the passive locking device (40, 140, 240, 340, 440, 540, 640) includes an abutment (13.1, 13.2, 113.1, 113.2, 213.1, 213.2, 313.1, 313.2, 413.1, 413.2, 513.1, 513.2, 613.1, 613.2) carried by the ring (13, 113, 213, 313, 413, 513, 613) for the purpose of co-operating with the lock (60, 160, 260, 360, 460, 560, 660), and the lock is functionally connected to the nut (19, 719), being arranged to prevent turning of the ring (13, 113, 213, 313, 413, 513, 613) when the lock (60, 160, 260, 360, 460, 560, 660) is in its first position;
- the movement conversion means (31, 41, 44, 48, 68, 70, 76, 78, 80.1, 80.2, 83, 84, 85, 87, 88, 89, 90, 91, 93, 95, 131, 141, 144, 148, 231, 241, 244, 248, 331, 341, 344, 431, 441, 444, 531, 541, 544, 631, 645, 668) comprise a rod (31, 131, 231, 331, 431, 531, 631) slidably mounted in a central housing (30, 130, 230, 330, 430, 530, 630) of the screw (15, 115, 215, 315, 415, 515, 615) extending along the longitudinal axis (Oy), the rod (31, 131, 231, 331, 431, 531, 631) being functionally connected to the element (2, 102, 202, 302, 402, 502, 602) that is to be moved so as to pass from a retracted first position of the rod (31, 131, 231, 331, 431, 531, 631) to a deployed second position of the rod (31, 131, 231, 331, 431, 531, 631) when the element (2, 102, 202, 302, 402, 502, 602) that is to be moved is taken beyond its retracted position;
- the movement conversion means (31, 41, 44, 48, 68, 70, 76, 78, 80.1, 80.2, 83, 84, 85, 87, 88, 89, 90, 91, 93, 95, 131, 141, 144, 148, 231, 241, 244, 248, 331, 341, 344, 431, 441, 444) also comprise a lever (41, 141, 241, 341, 441) pivotally mounted on the body, the lever (41, 141, 241, 341, 441) having a first end (42, 142, 242, 342, 442) arranged to be actuated by the rod (31, 131, 231, 331, 431) when it passes into its deployed second position; and
- the second end (43, 143, 243, 343, 443) of the lever (41, 141, 241, 341, 441) is arranged to move a second bushing (44, 144, 244, 344, 444) slidably mounted on a first shaft (45, 145, 245, 345, 445) that is constrained to turn with the lock (60, 160, 260, 360, 460) .

4. An electromechanical actuator (1, 101, 201, 301, 401, 501, 601) according to claim 2, wherein the outlet shaft (11) of the motor (10) is provided with a pinion (12) meshing with a ring (13, 113, 213, 313, 413, 513, 613) having internal teeth, and the screw (15, 115, 215, 315, 415, 515, 615) is constrained to turn with the ring (13, 113, 213, 313, 413, 513, 613),
- the passive locking device (40, 140, 240, 340, 440, 540, 640) includes an abutment (13.1, 13.2, 113.1, 113.2, 213.1, 213.2, 313.1, 313.2, 413.1, 413.2, 513.1, 513.2, 613.1, 613.2) carried by the ring (13, 113, 213, 313, 413, 513, 613) for the purpose of co-operating with the lock (60, 160, 260, 360, 460, 560, 660), and the lock is functionally connected to the nut (19, 719) being arranged to prevent turning of the ring (13, 113, 213, 313, 413, 513, 613) when the lock (60, 160, 260, 360, 460, 560, 660) is in its first position;
- the movement conversion means (31, 41, 44, 48, 68, 70, 76, 78, 80.1, 80.2, 83, 84, 85, 87, 88, 89, 90, 91, 93, 95, 131, 141, 144, 148, 231, 241, 244, 248, 331, 341, 344, 431, 441, 444, 531, 541, 544, 631, 645, 668) comprise a rod (31, 131, 231, 331, 431, 531, 631) slidably mounted in a central housing (30, 130, 230, 330, 430, 530, 630) of the screw (15, 115, 215, 315, 415, 515, 615) extending along the longitudinal axis (Oy), the rod (31, 131, 231, 331, 431, 531, 631) being functionally connected to the element (2, 102, 202, 302, 402, 502, 602) that is to be moved so as to pass from a retracted first position of the rod (31, 131, 231, 331, 431, 531, 631) to a deployed second position of the rod (31, 131, 231, 331, 431, 531, 631) when the element (2, 102, 202, 302, 402, 502, 602) that is to be moved is taken beyond its retracted position; and
- the movement conversion means (84, 85, 87, 88, 89, 90, 91, 93, 95, 531, 541, 544, 631, 645, 668) being arranged to convert a movement of the element (502, 602) that is to be moved beyond its retracted position into a turning movement of the rod (531, 631).

5. An electromechanical actuator (401) according to claim 3, wherein the movement conversion means (70, 76, 78, 80.1, 80.2, 83, 431, 441, 444) also comprise a plunger (70) rotatably mounted on the first shaft (445) and having a first end (70.1) of the plunger (70) that cooperates with a first end (76.1) of a cam body (76) connected to the first shaft (445) by a slideway type connection, the outer face (79) of the plunger (70) including at least one groove (79.1, 79.2) co-operating with a stop (80.1, 80.2) secured with the second bushing (444), the movement conversion means (70, 76, 78, 80.1, 80.2, 83, 431, 441, 444) also comprising first return means (83) for returning the second bushing (444) into position, together with thrust means (78) for thrusting the cam body (76) so as to bring the first end (76.1) of the cam body (76) against the first end (70.1) of the plunger (70).

6. An electromechanical actuator (1, 101, 201, 301, 401, 501, 601) according to any one of claims 3 to 5, wherein the first shaft (45, 145, 245, 345) has a groove (48, 148, 248, 348) extending helically along the first shaft (45, 145, 245, 345), the second bushing (44, 144, 244, 344) being secured to a first cylindrical ferrule (49, 149, 249, 349) provided with a follower (50) for co-operating with the groove (48, 148, 248, 348) and a keeper (52) arranged in such a manner that:
- movement of the second bushing (44, 144, 244, 344) on the first shaft (45, 145, 245, 345) in a first travel direction (I) causes the first shaft (45, 145, 245, 345) to turn relative to the second bushing (44, 144, 244, 344); and
- movement of the second bushing (44, 144, 244, 344) on the first shaft (45, 145, 245, 345) in a second travel direction (II) opposite to the first travel direction does not cause any turning of the first shaft (45, 145, 245, 345) relative to the second bushing (44, 144, 244, 344) .

7. An electromechanical actuator (401) according to claim 4 or claim 5, wherein the slideway type connection comprises a pin (76.6) extending through a longitudinal opening (77) in the first shaft (445).

8. An electromechanical actuator (401) according to claim 5 or claim 6, wherein the first return means of the second bushing and/or the means for thrusting the cam body comprise a helical spring (78, 83).

9. An electromechanical actuator (101, 201, 301, 401) according to any one of claims 3 to 8, wherein the central housing (130, 230, 330, 430, 530, 630) extends over the entire length of the screw (15, 115, 215, 315, 415, 515, 615), the rod (131, 231, 331, 431, 531, 631) having a first end projecting from a first end of the screw (115, 215, 315, 415, 515, 615).

10. An electromechanical actuator (1) according to any one of claims 3 to 8, wherein the central housing is blind, and wherein the rod (31) has a first portion extending in a bore (34) passing through the screw (15) in a direction that is substantially orthogonal to the longitudinal axis, the first portion of the rod (31) being connected to a first bushing (36) slidably mounted on the screw (15) to slide along the longitudinal axis (Oy).

11. An electromechanical actuator (1, 101, 201, 301, 401) according to any one of claims 3 to 10, comprising return means (36, 64) for returning the rod (31, 131, 231, 331, 431) to its retracted first position.

12. An electromechanical actuator (1) according to claim 3 or claim 4, comprising first return means (47) for returning the second bushing (44) in position.

13. An electromechanical actuator (1, 101, 201, 301) according to claim 6, wherein the follower (50) and the groove (48) are arranged in such a manner that movement of the second bushing (44, 144, 244, 344) on the first shaft (45, 145, 245, 345) in the first sliding direction (I) causes the first shaft (45, 145, 245, 345) to turn through 90° relative to the second bushing (44, 144, 244, 344) .

14. An electromechanical actuator (201) according to claim 6, wherein the follower (50) and the groove (48) are arranged in such a manner as to cause the lock (260) to pass selectively from one of its first and second positions to the other one of its first and second positions when the first shaft (245) turns through 180°.

15. An electromechanical actuator (501, 601) according to claim 4, wherein the rod (531, 631) is functionally constrained in rotation with a pinion (91) of gearing (93) driving a drive wheel (94) having at least one finger (94.1, 94.2) for co-operating with a slot (95.1, 95.2, 95.3, 95.4) of a driven wheel (95) of the Maltese cross type, the driven wheel (95) being constrained to rotate with the lock (560, 660).

16. An electromechanical actuator (501, 601) according to claim 15, wherein the driven wheel (95) has four slots (95.1, 95.2, 95.3, 95.4) and the drive wheel (94) has two fingers (94.1, 94.2).

17. An electromechanical actuator (501, 601) according to claim 15 or claim 16, wherein the portion (96.1, 96.2, 96.3, 96.4) of the driven wheel (95) between two successive slots (95.1, 95.2, 95.3, 95.4) describes a concave rounded curve for co-operating with a corresponding portion (94.3, 94.4) of the drive wheel (94) while it is turning.

18. An electromechanical actuator (201, 301, 601) according to any one of claims 3 to 17, wherein the lock (260, 360, 660) comprises a cam wheel (68, 688) secured to the first shaft (245, 345, 645) and acting on the first end (69.1, 669.1) of a latch (69, 669) pivotally mounted on the body (208, 308, 608) and having its first end (69.2, 669.2) co-operating selectively with the abutment (213.1, 213.2, 313.1, 313.2, 613.1, 613.2).

19. An electromechanical actuator (1) according to anyone of claims 3 to 17, wherein the lock (60) is constrained to rotate with the first shaft (45) and has at least one convex portion (61.1, 61.2) for co-operating with the abutment (13) when the lock (60) is in its first position and a concave portion (62.1, 62.2) arranged to leave the ring (13) free to turn when the lock (60) is in its second position.

20. An electromechanical actuator (1, 101, 201, 301, 401, 501, 601) according to claim 19, wherein the convex portion (61.1, 61.2) is a portion of a disk having its center situated on the axis of rotation (O₄₅) of the first shaft (45).

21. An electromechanical actuator (501, 601) according to claim 3 or claim 4, wherein the movement conversion means (84, 85, 87, 88, 89, 90, 91, 93, 95, 531, 541, 544, 631, 645, 668) are arranged to convert a movement of the element (502, 602) that is to be moved beyond its retracted position into a turning movement of the rod (531, 631).

22. An electromechanical actuator (501, 601) according to claim 21, wherein the rod (531, 631) is functionally constrained in rotation with a pinion (91) of gearing (93) driving a drive wheel (94) having at least one finger (94.1, 94.2) for co-operating with a slot (95.1, 95.2, 95.3, 95.4) of a driven wheel (95) of the Maltese cross type, the driven wheel (95) being constrained to rotate with the lock (560, 660).

23. An electromechanical actuator (501, 601) according to claim 21, wherein the driven wheel (95) has four slots (95.1, 95.2, 95.3, 95.4) and the drive wheel (94) has two fingers (94.1, 94.2).

24. An electromechanical actuator (501, 601) according to claim 22 or claim 23, wherein the portion (96.1, 96.2, 96.3, 96.4) of the driven wheel (95) between two successive slots (95.1, 95.2, 95.3, 95.4) describes a concave rounded curve for co-operating with a corresponding portion (94.3, 94.4) of the drive wheel (94) while it is turning.

25. An electromechanical actuator (201, 301, 601) according to any one of claims 3 to 24, wherein the lock (260, 360, 660) comprises a cam wheel (68, 688) secured to the first shaft (245, 345, 645) and acting on the first end (69.1, 669.1) of a latch (69, 669) pivotally mounted on the body (208, 308, 608) and having its first end (69.2, 669.2) co-operating selectively with the abutment (213.1, 213.2, 313.1, 313.2, 613.1, 613.2).

26. An electromechanical actuator (701) according to claim 2, wherein the movement conversion means (1031, 736, 742) comprise a slide (1031) mounted to slide in a central housing (30) of the screw (715) extending along the longitudinal axis (Oy), the slide (1031) being functionally connected to the element (702) that is to be moved in such a manner as to pass from a deployed first position of the slide (1031) to a retracted second position of the slide (1031) when the element (702) to be moved is taken beyond its retracted position.

27. An electromechanical actuator (701) according to claim 26, wherein the slide (1031) comprises a first portion (1033) extending in a bore (1034) crossing the screw (715) in a direction that is substantially orthogonal to the longitudinal axis, the first portion of the slide (1031) being connected to a first bushing (736) slidably mounted on the screw (715) to slide along the longitudinal axis (Oy).

28. An electromechanical actuator (701) according to claim 26 or claim 27, comprising return means (1042) for returning the slide (1031) towards its deployed first position and arranged to hold the slide (1031) in its retracted second position for a predetermined duration prior to returning the slide (1031) towards its deployed first position.

29. An electromechanical actuator (701) according to any one of claims 26 to 28, wherein the slide (1031) comprises at least one frustoconical portion (1037).

30. An electromechanical actuator (701) according to any one of claims 26 to 28, wherein the lock (760) includes at least one ball (1051, 1052).

31. An electromechanical actuator (701) according to any one of claims 26 to 29, wherein the lock (760) is arranged to constrain the nut (719) to rotate with the screw (715) when the nut is in its first position.

32. An electromechanical actuator (1) according to any preceding claim, including detector means (63) for detecting the position of the lock (60).

33. An electromechanical actuator (1, 101, 201, 301, 401, 501, 601) according to claim 1, wherein the actuator means include movement conversion means (31, 41, 44, 48, 68, 70, 76, 78, 80.1, 80.2, 83, 84, 85, 87, 88, 89, 90, 91, 93, 95, 131, 141, 144, 148, 231, 241, 244, 248, 331, 341, 344, 431, 441, 444, 531, 541, 544, 631, 645, 668) arranged to convert a movement of the element (2, 102, 202, 302, 402, 502, 602, 702) that is to be displaced beyond its retracted first position into a movement in translation suitable for causing the lock (60, 160, 260, 360, 460, 560, 660, 760) to pass from one of its first and second positions to the other one of its first and second positions.

34. An electromechanical actuator (1) according to claim 33, wherein the movement conversion means (31, 36, 42) comprise a slide (31) mounted to slide in a central housing (30) of the screw (15) extending along the longitudinal axis (Oy), the slide (31) being functionally connected to the element (2) that is to be moved in such a manner as to pass from a deployed first position of the slide (31) to a retracted second position of the slide (31) when the element (2) to be moved is taken beyond its retracted position.

35. An electromechanical actuator (1) according to claim 34, wherein the slide (31) comprises a first portion (33) extending in a bore (34) crossing the screw (15) in a direction that is substantially orthogonal to the longitudinal axis, the first portion of the slide (31) being connected to a first bushing (36) slidably mounted on the screw (15) to slide along the longitudinal axis (Oy) .

36. An electromechanical actuator (1) according to claim 34 or claim 35, comprising return means (42) for returning the slide (31) towards its deployed first position and arranged to hold the slide in its retracted second position for a predetermined duration prior to returning the slide (31) towards its deployed first position.

37. An electromechanical actuator (1) according to any one of claims 34 to 36, wherein the slide (31) comprises at least one frustoconical portion (37).

38. An electromechanical actuator (1) according to any one of claims 34 to 37, wherein the lock (60) includes at least one ball (51, 52).

39. An electromechanical actuator (1) according to any preceding claim, wherein the lock (60) is arranged to constrain the nut (19) to rotate with the screw (15) when the nut is in its first position.
